(19) Europäisches Patentamt
European Patent Office
Office européen des brevets

(11) EP 2 690 149 B1

(12) # EUROPEAN PATENT SPECIFICATION

(45) Date of publication and mention of the grant of the patent:
**18.02.2015 Bulletin 2015/08**

(51) Int Cl.:
***C09J 7/02*** *(2006.01)* ***C09J 133/08*** *(2006.01)*

(21) Application number: **13177925.8**

(22) Date of filing: **25.07.2013**

(54) **Re-Peelable Water Dispersion Type Acryl-Based Pressure-Sensitive Adhesive Composition, Pressure-Sensitive Adhesive Sheet, and Optical Member**

Wiederabziehbare wasserdispergierbare acrylbasierte druckempfindliche Klebstoffzusammensetzung, druckempfindliche Klebefolie, und optisches Element

Composition d'adhésif sensible à la pression à base d'acrylique de type dispersion aqueuse détachable, feuille adhésive sensible à la pression et élément optique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2012 JP 2012167434**

(43) Date of publication of application:
**29.01.2014 Bulletin 2014/05**

(73) Proprietor: **NITTO DENKO CORPORATION**
**Ibaraki-shi, Osaka 567-8680 (JP)**

(72) Inventors:
- **Morimoto, Yu**
  **Ibaraki-shi, Osaka 567-8680 (JP)**
- **Mitsui, Kazuma**
  **Ibaraki-shi, Osaka 567-8680 (JP)**
- **Amano, Tatsumi**
  **Ibaraki-shi, Osaka 567-8680 (JP)**
- **Yonezaki, Kousuke**
  **Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(56) References cited:
**WO-A1-2011/132567** **JP-A- 2007 031 585**
**JP-A- 2011 225 764**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 690 149 B1

## Description

BACKGROUND OF THE INVENTION

Field of the Invention

The present invention relates to a water dispersion type acryl-based pressure-sensitive adhesive composition which can form a pressure-sensitive adhesive layer having an antistatic property at low humidity. More specifically, the present invention relates to a re-peelable water dispersion type acryl-based pressure-sensitive adhesive composition, which can prevent electrification at the time of peeling off under low humidity environments (an antistatic property for peeling off in low humidity) independently of an adherend and which can form a pressure-sensitive adhesive layer excellent in adherability and re-peelable properties. The present invention also relates to a pressure-sensitive adhesive sheet having a pressure-sensitive adhesive layer including the above-mentioned pressure-sensitive adhesive composition.

Description of the Related Art

In the production and processing processes of an optical member (optical material) represented by an optical film to be used for a polarizing plate, a retardation plate, a reflection prevention plate, etc., for the purpose of preventing scratching and staining on the surface, improving the cutting processibility, suppressing cracks, and the like, a surface protecting film is used while being stuck to the surface of the optical member (see Patent Documents 1 and 2). As the surface protecting film, a re-peelable pressure-sensitive adhesive sheet obtained by forming a re-peelable pressure-sensitive adhesive layer on the surface of a plastic film substrate has been usually used.

Previously, solvent type acryl-based pressure-sensitive adhesives have been used as a pressure-sensitive adhesive for surface protecting films (see Patent Documents 1 and 2) ; however since these solvent type acryl-based pressure-sensitive adhesives contain an organic solvent, it has been tried to replace these solvent type acryl-based pressure-sensitive adhesives with water dispersion type acryl-based pressure-sensitive adhesives from the viewpoint of working environments at the time of application (see Patent Documents 3 to 5).

These surface protecting films are required to have sufficient adherability (tackiness) during the time the surface protecting films are stuck to optical members. Further, these surface protecting films are required to have excellent peelable (re-peelable) properties since the surface protecting films are peeled off after used in the production process for optical members.

In general, surface protecting films or optical members are made of a plastic material, and thus have high electrical insulating properties and generate static electricity at the time of friction or peeling off. Accordingly, when a surface protecting film is peeled off from an optical member such as a polarizing plate, static electricity is generated and when a voltage is applied to a liquid crystal in the state where the static electricity generated at that time remains as it is, it leads to problems such that orientation of liquid crystal molecules is lost or a defect occurs in a panel.

Further, existence of static electricity may possibly cause other problems of attraction of dust and waste or deterioration of workability. Accordingly, in order to solve the above-mentioned problems, surface protecting films are subjected to various kinds of antistatic treatments.

Disclosed, as a trial for suppressing electrification of static electricity, is a method for performing antistatic treatment by adding a surfactant with a low molecular weight to a pressure-sensitive adhesive and transferring the surfactant to an object to be protected from the pressure-sensitive adhesive (e.g., see Patent Document 6). However, in this method, the added surfactant with a low molecular weight easily bleeds to the pressure-sensitive adhesive surface and in the case where the method is employed for a surface protecting film, there is a concern of staining of an adherend (an object to be protected) .

Further, in use as a surface protecting film (particularly, use as a surface protecting film for an optical member), residue (so-called "adhesive residue") of apressure-sensitive adhesive on the surface of an adherend (optical member, etc.) at the time of peeling a pressure-sensitive adhesive sheet leads a problem, e.g., an adverse effect on optical properties of an optical member and therefore, a pressure-sensitive adhesive and a pressure-sensitive adhesive layer are required to be excellent in easy peeling properties (re-peelable properties).

In the case of sticking a surface protecting film to an optical member serving as an adherend or the like, and thereafter peeling off the surface protecting film under low humidity environments, the electrification voltage is increased depending on the surface state of the adherend as compared with that under normal humidity environments, and it may possibly result in occurrence of the above-mentioned problems.

PRIOR ART DOCUMENTS

PATENT DOCUMENTS

Patent Document 1: JP-A H11-000961
Patent Document 2: JP-A 2001-064607
Patent Document 3: JP-A 2001-131512
Patent Document 4: JP-A 2003-027026
Patent Document 5: JP 3810490
Patent Document 6: JP-A H09-165460

SUMMARY OF THE INVENTION

PROBLEMS TO BE SOLVED BY THE INVENTION

However, as described above, the foregoing problems have not been solved yet in good balance by any of the above means, and in a technical field relevant to electronic appliances where electrification becomes a particularly serious problem, it is difficult to satisfy further demands for improvement of a surface protecting film having antistatic properties or the like, and presently, a water dispersion type acryl-based pressure-sensitive adhesive having excellent re-peelable properties have not been obtained.

Accordingly, an aim of the prevention invention is to provide a water dispersion type acryl-based pressure-sensitive adhesive composition for re-peeling, which can prevent electrification of an adherend at the time of peeling off under low humidity environments (an antistatic property) and which can form a pressure-sensitive adhesive layer excellent in adherability and re-peelable properties, and also to provide a pressure-sensitive adhesive sheet having a pressure-sensitive adhesive layer including the pressure-sensitive adhesive composition.

MEANS FOR SOLVING THE PROBLEMS

The inventors of the present invention have made various investigations to achieve the above-mentioned aim and found it possible to obtain a re-peelable water dispersion type acryl-based pressure-sensitive adhesive composition which contains an acrylic emulsion-based polymer having a specified average particle diameter and produced from raw material monomers with specified compositions, a crosslinking agent, and an ionic compound which is an ionic liquid and/or an alkali metal salt as constituent components, which can prevent electrification at the time of peeling off under low humidity environments (an antistatic property for peeling off in low humidity) independently of an adherend and which can form a pressure-sensitive adhesive layer excellent in adherability and re-peelable properties, and thus have completed the present invention.

That is, a re-peelable water dispersion type acryl-based pressure-sensitive adhesive composition according to the present invention contains an acrylic emulsion-based polymer composed of a (meth)acrylic acid alkyl ester in an amount of 70 to 99.5% by weight and a carboxyl-containing unsaturated monomer in an amount of 0.5 to 10% by weight as raw material monomers, a crosslinking agent, and an ionic compound. The acrylic emulsion-based polymer has an average particle diameter of 130 to 600 nm. The ionic compound is an ionic liquid and/or an alkali metal salt.

It is preferable that in the re-peelable water dispersion type acryl-based pressure-sensitive adhesive composition of the present invention, the ionic compound contains an imide-containing anion.

It is preferable that in the re-peelable water dispersion type acryl-based pressure-sensitive adhesive composition of the present invention, the ionic compound contains a sulfonyl-containing anion.

It is preferable that in the re-peelable water dispersion type acryl-based pressure-sensitive adhesive composition of the present invention, the ionic compound contains a fluoroalkyl-containing anion.

It is preferable that in the re-peelable water dispersion type acryl-based pressure-sensitive adhesive composition of the present invention, the ionic compound is an ionic liquid and contains at least one kind cation selected from the group consisting of cations represented by the following formulas (A) to (E):

[Formula 1]

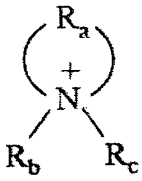
(A)

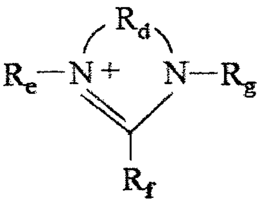
(B)

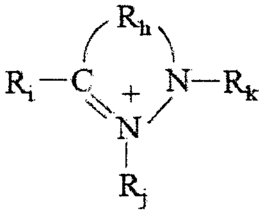
(C)

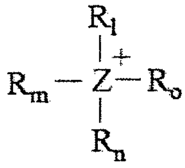
(D)

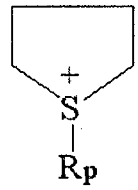
(E)

[in the formula (A), $R_a$ represents a hydrocarbon group with 4 to 20 carbon atoms or is optionally a functional group formed by partially substituting the hydrocarbon group with a heteroatom; and $R_b$ and $R_c$ are the same or different, and each represent hydrogen or a hydrocarbon group with 1 to 16 carbon atoms or are each optionally a functional group formed by partially substituting the hydrocarbon group with a heteroatom; provided that the nitrogen atom contains a double bond, there is no $R_c$];
[in the formula (B), $R_d$ represents a hydrocarbon group with 2 to 20 carbon atoms or is optionally a functional group formed by partially substituting the hydrocarbon group with a heteroatom; and $R_e$, $R_f$, and $R_g$ are the same or different, and each represent hydrogen or a hydrocarbon group with 1 to 16 carbon atoms or are each optionally a functional group formed by partially substituting the hydrocarbon group with a heteroatom];
[in the formula (C), $R_h$ represents a hydrocarbon group with 2 to 20 carbon atoms or is optionally a functional group formed by partially substituting the hydrocarbon group with a heteroatom; and $R_i$, $R_j$, and $R_k$ are the same or different, and each represent hydrogen or a hydrocarbon group with 1 to 16 carbon atoms or are each optionally a functional group formed by partially substituting the hydrocarbon group with a heteroatom];
[in the formula (D), Z represents a nitrogen, sulfur or phosphorus atom; $R_l$, $R_m$, $R_n$, and $R_o$ are the same or different, and each represent a hydrocarbon group with 1 to 20 carbon atoms or are each optionally a functional group formed by partially substituting the hydrocarbon group with a heteroatom; provided that Z is a sulfur atom, there is no $R_o$]; and
[in the formula (E), Rp represents a hydrocarbon group with 1 to 18 carbon atoms or is optionally a functional group formed by partially substituting the hydrocarbon group with a heteroatom].

It is preferable that in the re-peelable water dispersion type acryl-based pressure-sensitive adhesive composition of the present invention, the cation of the ionic liquid is at least one kind cation selected from the group consisting of cations of imidazolium-containing salt type, pyridinium-containing salt type, morpholinium-containing salt type, pyrrolidinium-containing salt type, piperidinium-containing salt type, ammonium-containing salt type, phosphonium-containing salt type, and sulfonium-containing salt type.

It is preferable that in the re-peelable water dispersion type acryl-based pressure-sensitive adhesive composition of the present invention, the ionic liquid contains at least one kind cation selected from the group consisting of cations represented by the following formulas (a) to (d):

[Formula 2]

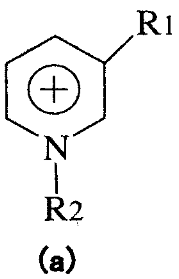
**(a)**

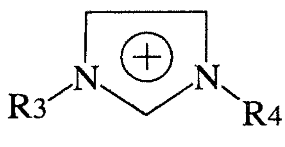
**(b)**

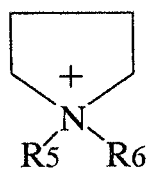
**(c)**

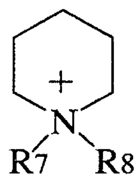
**(d)**

[in the formula (a), $R_1$ represents hydrogen or a hydrocarbon group with 1 to 3 carbon atoms; and $R_2$ represents hydrogen or a hydrocarbon group with 1 to 7 carbon atoms];
[in the formula (b), $R_3$ represents hydrogen or a hydrocarbon group with 1 to 3 carbon atoms; and $R_4$ represents hydrogen or a hydrocarbon group with 1 to 7 carbon atoms];
[in the formula (c), $R_5$ represents hydrogen or a hydrocarbon group with 1 to 3 carbon atoms; and $R_6$ represents hydrogen or a hydrocarbon group with 1 to 7 carbon atoms]; and

[in the formula (d), $R_7$ represents hydrogen or a hydrocarbon group with 1 to 3 carbon atoms; and $R_8$ represents hydrogen or a hydrocarbon group with 1 to 7 carbon atoms].

It is preferable that in the re-peelable water dispersion type acryl-based pressure-sensitive adhesive composition of the present invention, the ionic compound is an alkali metal salt.

It is preferable that in the re-peelable water dispersion type acryl-based pressure-sensitive adhesive composition of the present invention, the alkali metal salt is a lithium salt.

It is preferable that the re-peelable water dispersion type acryl-based pressure-sensitive adhesive composition of the present invention contains 0.1 to 3 parts by weight of the ionic compound per 100 parts by weight of the acrylic emulsion-based polymer (solid matter).

It is preferable that the re-peelable water dispersion type acryl-based pressure-sensitive adhesive composition of the present invention contains 0.2 to 1 part by weight of an ether-containing polysiloxane per 100 parts by weight of the acrylic emulsion-based polymer (solid matter).

It is preferable that in the re-peelable water dispersion type acryl-based pressure-sensitive adhesive composition of the present invention, the acrylic emulsion-based polymer is a polymer obtained by polymerization using a reactive emulsifier containing a radical polymerizable functional group in the molecule.

It is preferable that in the re-peelable water dispersion type acryl-based pressure-sensitive adhesive composition of the present invention, the acrylic emulsion-based polymer is a polymer obtained by polymerization of the entire amount of a monomer emulsion formed of the raw material monomers by dropping.

It is preferable that the re-peelable water dispersion type acryl-based pressure-sensitive adhesive composition of the present invention further contains a water-insoluble crosslinking agent having two or more functional groups which can be reacted with a carboxyl group in the molecule.

It is preferable that in the re-peelable water dispersion type acryl-based pressure-sensitive adhesive composition of the present invention, the acrylic emulsion-based polymer is a polymer obtained by polymerization using 0.01 to 1 part by weight of a polymerization initiator per 100 parts by weight in total of the raw material monomers.

It is preferable that in the re-peelable water dispersion type acryl-based pressure-sensitive adhesive composition of the present invention, the acrylic emulsion-based polymer is a polymer obtained by polymerization using a chain transfer agent.

It is preferable that a pressure-sensitive adhesive sheet according to the present invention has a substrate and a pressure-sensitive adhesive layer formed of the re-peelable water dispersion type acryl-based pressure-sensitive adhesive composition on at least one surface of the substrate.

It is preferable that the pressure-sensitive adhesive sheet of the present invention is a surface protecting film for an optical member.

A method for producing a pressure-sensitive adhesive sheet according to the present invention preferably includes steps of preparing a monomer emulsion by stirring and mixing the raw material monomers and preparing the acrylic emulsion-based polymer by dropping the entire amount of the monomer emulsion and carrying out polymerization reaction.

The pressure-sensitive adhesive sheet of the present invention is preferably obtained by the above-mentioned production method.

An optical member according to the present invention is preferably an optical member obtained by stacking the pressure-sensitive adhesive sheet.

## EFFECT OF THE INVENTION

A pressure-sensitive adhesive layer (pressure-sensitive adhesive sheet) formed of the water dispersion type acryl-based pressure-sensitive adhesive composition of the present invention has excellent antistatic properties at low humidity (an antistatic property for peeling off in low humidity), adherability, and re-peelable properties. Accordingly, the water dispersion type acryl-based pressure-sensitive adhesive composition of the prevent invention is useful for protecting the surface of an optical film or the like.

## BRIEF DESCRIPTION OF THE DRAWINGS

Fig. 1 is a schematic view of a potential measurement part.

## DETAILED DESCRIPTION OF THE PREFERRED EMBODIMENTS

A re-peelable water dispersion type acryl-based pressure-sensitive adhesive composition according to the present invention (may be referred to as "pressure-sensitive adhesive composition") contains an acrylic emulsion-based polymer composed of a (meth)acrylic acid alkyl ester (i) and a carboxyl-containing unsaturated monomer (ii) as raw

material monomers, a crosslinking agent, and an ionic compound. Herein, in the pressure-sensitive adhesive composition of the present invention, "water dispersion type" refers to dispersible in an aqueous medium, that is, a pressure-sensitive adhesive composition dispersible in an aqueous medium. The aqueous medium is a medium (dispersant) containing water as an indispensable component and may be water alone or a mixture of water and a water-soluble organic solvent. The pressure-sensitive adhesive composition of the present invention may be a dispersion using the aqueous medium or the like.

[Acrylic emulsion-based polymer]

The acrylic emulsion-based polymer is a polymer composed of a (meth)acrylic acidalkyl ester (i) and a carboxyl-containing unsaturated monomer (ii) as raw material monomers. The acrylic emulsion-based polymers may be used alone or in combination of two or more thereof. In the present invention, "(meth)acryl" refers to "acryl" and/or "methacryl".

The (meth) acrylic acid alkyl ester (i) is used as a main monomer component and plays a role as a pressure-sensitive adhesive (or pressure-sensitive adhesive layer) for exhibiting mainly basic characteristics such as tackiness and peeling properties. Particularly, an acrylic acid alkyl ester tends to give flexibility to a polymer which forms a pressure-sensitive adhesive layer and to exert an effect of allowing the pressure-sensitive adhesive layer to exhibit adhesion and adherability, and a methacrylic acid alkyl ester tends to give hardness to a polymer which forms a pressure-sensitive adhesive layer and to exert an effect of adjusting the re-peelable properties of the pressure-sensitive adhesive layer. Examples of the (meth)acrylic acid alkyl ester (i) include, but are not particularly limited to, (meth) acrylic acid alkyl esters having a straight chain, branched chain, or cyclic alkyl group with 2 to 16 (more preferably 2 to 10 and furthermore preferably 4 to 8) carbon atoms, and the like.

Among them, the acrylic acid alkyl ester is preferably, for example, an acrylic acid alkyl ester having an alkyl group with 2 to 14 (more preferably 4 to 9) carbon atoms, and examples thereof include acrylic acid alkyl esters having a straight chain or branched chain alkyl group such as n-butyl acrylate, isobutyl acrylate, sec-butyl acrylate, isoamyl acrylate, hexyl acrylate, heptyl acrylate, octyl acrylate, 2-ethylhexyl acrylate, isooctyl acrylate, nonyl acrylate, and isononyl acrylate; and the like. Particularly, 2-ethylhexyl acrylate is preferable.

Themethacrylic acidalkyl ester is preferably, for example, a methacrylic acid alkyl ester having an alkyl group with 2 to 16 (more preferably 2 to 10) carbon atoms, and examples thereof include methacrylic acid alkyl esters having a straight chain or branched chain alkyl group such as ethyl methacrylate, propyl methacrylate, isopropyl methacrylate, n-butyl methacrylate, isobutyl methacrylate, sec-butyl methacrylate, and tert-butyl methacrylate; alicyclic methacrylic acid alkyl esters such as cyclohexyl methacrylate, bornyl methacrylate, and isobornyl methacrylate; and the like.

The (meth) acrylic acid alkyl esters (i) may be selected properly in accordance with adherability of interest and the like, and used alone or in combination of two or more thereof.

The content of the (meth) acrylic acid alkyl ester (i) is 70 to 99.5% by weight, preferably 85 to 98% by weight, and more preferably 87 to 96% by weight in total (100% by weight) of the raw material monomers (entire raw material monomers) constituting the acrylic emulsion-based polymer of the present invention. If the content is 70% by weight or more, the tackiness and re-peelable properties of the pressure-sensitive adhesive layer are improved and therefore, it is preferable. On the other hand, if the content exceeds 99.5% by weight, the content of the carboxyl-containing unsaturated monomer (ii) is decreased so that the appearance of the pressure-sensitive adhesive layer formed of the pressure-sensitive adhesive composition may be worsened. In the case where two ormore kindof the (meth) acrylic acid alkyl esters (i) are used, the sum (total) of all the (meth)acrylic acid alkyl esters (i) should be within the above-mentioned range.

The carboxyl-containing unsaturated monomer (ii) exerts a function of forming a protecting layer on the surfaces of emulsion particles composed of the acrylic emulsion-based polymer of the present invention to prevent shear fracture of the particles. The effect can be improved further by neutralizing the carboxyl group with a base. The stability against the shear fracture of the particles is more generally referred to as mechanical stability. Use of one or more kinds of the water-insoluble crosslinking agents of the present invention in combination, which react with a carboxyl group, can provide crosslinking points at the stage of forming a pressure-sensitive adhesive layer by water removal. Further, the adhesion (anchoring properties) to a substrate can be improved through the water-insoluble crosslinking agent. Examples of the carboxyl-containing unsaturated monomer (ii) include (meth) acrylic acids (acrylic acid and methacrylic acid), itaconic acid, maleic acid, fumaric acid, crotonic acid, carboxyethyl acrylate, carboxypentyl acrylate, and the like. The carboxyl-containing unsaturated monomer (ii) may also contain acid anhydride-containing unsaturated monomers such as maleic anhydride and itaconic anhydride. Among them, acrylic acid is preferable since acrylic acid exists in a relatively high concentration on the surfaces of the particles and easily forms a protecting layer with a higher density.

The content of the carboxyl-containing unsaturated monomer (ii) is 0.5 to 10% by weight, preferably 1 to 5% by weight, and more preferably 2 to 4% by weight in total (100% by weight) of the raw material monomers (entire raw material monomers) constituting the acrylic emulsion-based polymer of the present invention. Adjustment of the content to 10% by weight or lower can suppress, after formation of the pressure-sensitive adhesive layer, an increase in interaction of the pressure-sensitive adhesive layer with a functional group existing on the surface of an adherend (an object to be

protected) such as a polarizing plate to suppress an increase in peeling power (adhesive power) with the lapse of time, and thus to improve the peeling properties and therefore, it is preferable. If the content exceeds 10% by weight, since the carboxyl-containing unsaturated monomer (ii) (e.g., acrylic acid) is generally water-soluble, it may possibly be polymerized in water to cause an increase in viscosity (viscosity increasing). Further, if a large number of carboxyl groups exist in the skeleton of the acrylic emulsion-based polymer, it is supposed that the pressure-sensitive adhesive layer interacts with an ionic compound blended as an antistatic agent to hinder ion conductivity, and no antistatic performance to an adherend can be obtained and therefore, it is not preferable. On the other hand, adjustment of the content to 0.5% by weight or more improves the mechanical stability of the emulsion particles and therefore, it is preferable. The adhesion (anchoring properties) between the pressure-sensitive adhesive layer and the substrate can be improved to suppress the adhesive residue and therefore, it is preferable.

For the purpose of providing a specified function, the raw material monomers constituting the acrylic emulsion-based polymer of the present invention may include other monomer components in combination other than the above indispensable components [(meth)acrylic acid alkyl ester (i) and carboxyl-containing unsaturated monomer (ii)]. For example, for the purpose of decreasing appearance defects, methyl methacrylate, vinyl acetate, diethylacrylamide, and the like can be used as the monomer components. In the case of using these monomers, the stability of the emulsion particles is increased, gelling matters (agglomerates) can be decreased, the affinity with a hydrophobic water-insoluble crosslinking agent is increased, dispersibility of the emulsion particles is improved ,and dents in the pressure-sensitive adhesive layer due to defective dispersion can be decreased. For the purpose of improving crosslinking among the emulsion particles and cohesive strength, epoxy-containing monomers such as glycidyl (meth)acrylate and polyfunctional monomers such as trimethylolpropane tri(meth)acrylate and divinylbenzene are also usable. It is preferable to blend (add) these monomers at a ratio of lower than 5% by weight, respectively. The blend amount (use amount) is a content in total (100% by weight) of the raw material monomers (entire raw material monomers) constituting the acrylic emulsion-based polymer of the present invention.

It is preferable that the blend amount (use amount) of a hydroxyl-containing unsaturated monomer, as the other monomer components, such as 2-hydroxyethyl acrylate or 2-hydroxypropyl acrylate is small from the viewpoint of a decrease in whitening staining. Specifically, the blend amount of the hydroxyl-containing unsaturated monomer (the content in total (100% by weight) of the rawmaterial monomers (entire rawmaterial monomers) constituting the acrylic emulsion-based polymer of the present invention) is preferably lower than 1% by weight, more preferably lower than 0.1% by weight, and furthermore preferablysubstantiallynull (e.g., lower than 0.05% by weight). However, in the case where crosslinking points for crosslinking of a hydroxyl group and an isocyana to group, metal crosslinking, and the like are intended to be introduced, the monomer may be added (used) in an amount of about 0.01 to 10% by weight.

The acrylic emulsion-based polymer of the present invention can be obtained by the emulsion polymerization of the raw material monomers (monomer mixture) with an emulsifier and a polymerization initiator.

It is preferable to use reactive emulsifiers having radical polymerizable functional groups introduced into the molecules (reactive emulsifiers including radical polymerizable functional groups) as the emulsifier to be used for the emulsion polymerization of the acrylic emulsion-based polymer of the present invention. These emulsifiers may be used alone or in combination of two or more thereof.

[Reactive emulsifier]

The reactive emulsifier having a radical polymerizable functional group (hereinafter, referred to as "reactive emulsifier") is an emulsifier having at least one radical polymerizable functional group in the molecule (one molecule). The reactive emulsifier is not particularly limited, and one or more kinds of various reactive emulsifiers having radical polymerizable functional groups such as a vinyl group, a propenyl group, an isopropenyl group, a vinyl ether group (vinyloxy group), and an allyl ether group (allyloxy group) may be selected and used. Use of the reactive emulsifier allows the emulsifier to be incorporated into the polymer, and staining derived from the emulsifier is reduced and therefore, it is preferable.

Examples of the reactive emulsifier include reactive emulsifiers having a configuration (or equivalent configuration) formed by introducing a radical polymerizable functional group (radical reactive group) such as a propenyl group or an allyl ether group into a nonionic anionic emulsifier (anionic emulsifier having a nonionic hydrophilic group) such as sodium polyoxyethylene alkyl ether sulfate, polyoxyethylene alkylphenyl ether ammonium sulfate, sodium polyoxyethylene alkylphenyl ether sulfate, and sodium polyoxyethylene alkylsulfosuccinate. Hereinafter, a reactive emulsifier having a configuration formed by introducing a radical polymerizable functional group into an anionic emulsifier will be referred to as "anionic reactive emulsifier". A reactive emulsifier having a configuration formed by introducing a radical polymerizable functional group into a nonionic anionic emulsifier will be referred to as "nonionic anionic reactive emulsifier".

In the case where an anionic reactive emulsifier (especially, nonionic anionic reactive emulsifier) is particularly used, the low staining properties can be improved since the emulsifier is incorporated into the polymer. Further, in the

case where the water-insoluble crosslinking agent of the present invention is a polyfunctional epoxy-based crosslinking agent having an epoxy group, the reactivity of the crosslinking agent can be improved due to its catalytic action. In the case where an anionic reactive emulsifier is not used, the crosslinking reaction is not finished through aging, and it may result in a problem such that the peeling power (adhesive power) of the pressure-sensitive adhesive layer changes with the lapse of time. Further, since the anionic reactive emulsifier is incorporated into the polymer, unlike a quaternary ammonium compound which is used generally as a catalyst for an epoxy-based crosslinking agent (e.g., see JP-A 2007-031585), the anionic reactive emulsifier is not deposited on the surface of an adherend, the emulsifier cannot be a cause of whitening staining and therefore, it is preferable.

It is possible to use, as the anionic reactive emulsifier, commercializedproducts suchas tradename "Adeka Reasoap SE-10N" (manufactured by ADEKA CORPORATION), trade name "Aqualon HS-10" (manufactured by DAI-ICHI KOGYO SEIYAKU CO., LTD.), trade name "Aqualon HS-05" (manufactured by DAI-ICHI KOGYO SEIYAKU CO., LTD.), and trade name "AqualonHS-1025" (manufacturedbyDAI-ICHI KOGYO SEIYAKU CO., LTD.).

Particularly, since impurity ions may be problematic, it is desirable to use an emulsifier from which impurity ions are removed and which has a $SO_4^{2-}$ ion concentration of 100 $\mu$g/g or lower. In the case of an anionic emulsifier, it is desirable to use an ammonium salt emulsifier. As a method for removing impurities from an emulsifier, proper methods such as an ion exchange resin method, a membrane separation method, an impurity precipitation filtration method using an alcohol, and the like may be used.

The blend amount (use amount) of the reactive emulsifier is preferably 0.1 to 10 parts by weight, more preferably 0.5 to 6 parts by weight, and furthermore preferably 1 to 4 parts by weight per 100 parts by weight in total of the raw material monomers (entire rawmaterial monomers) constituting the acrylic emulsion-based polymer of the present invention. Adjustment of the blend amount to 0.1 parts by weight or more makes it possible to maintain stable emulsification and therefore, itispreferable. On the other hand, adjustment of the blend amount to 10 parts by weight or lower makes it possible to improve the cohesive strength of the pressure-sensitive adhesive (pressure-sensitive adhesive layer), to suppress staining of an adherend, and to suppress staining with the emulsifier and therefore, it is preferable.

[pH Buffer]

In the case of emulsification polymerization of a monomer mixture by using a reactive emulsifier, a pH buffer may be used in combination if necessary in order to adjust pH,. The pH buffer is not particularly limited as long as it has a pH buffer action, and examples thereof include sodium hydrogen carbonate, potassium hydrogen carbonate, monosodium phosphate, monopotassium phosphate, disodium phosphate, trisodium phosphate, sodium acetate, ammonium acetate, sodium formate, ammonium formate, and the like.

[Polymerization initiator]

It is preferable that in the pressure-sensitive adhesive sheet of the present invention, the acrylic emulsion-based polymer is a polymer obtained by polymerization using a polymerization initiator. The polymerization initiator to be used for emulsion polymerization of the acrylic emulsion-based polymer of the present invention is not particularly limited, and examples thereof include azo-based polymerization initiators such as 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine); persulfuric acid salts such as potassium persulfate and ammonium persulfate; peroxide-based polymerization initiators such as benzoyl peroxide, tert-butyl hydroperoxide, and hydrogen peroxide; redox-based polymerization initiators obtained by using peroxides and reducing agents in combination such as a combination of a peroxide and ascorbic acid (combination of hydrogen peroxide and ascorbic acid, etc.), a combination of a peroxide and a ferrous salt (combination of hydrogen peroxide and a ferrous salt), and a combination of a persulfate and sodium hydrogen sulfite.

The blend amount (use amount) of the polymerization initiator is not particularly limited and can be properly determined depending the kinds of the initiator or raw material monomers, but is preferably 0.01 to 1 part by weight and more preferably 0.02 to 0.5 parts by weight per 100 parts by weight in total of the raw material monomers (entire raw material monomers) constituting the acrylic emulsion-based polymer of the present invention. Regarding the blend (dropping) of the polymerization initiator, there are entire dropping polymerization in which all amount is dropped at a time and two-step polymerization in which dropping is carried out separately two times, and the former is a preferable aspect since it is easy to control the particle diameter of the emulsion and it provides an advantageous effect on the antistatic property.

[Chain transfer agent]

It is preferable that in the pressure-sensitive adhesive sheet of the present invention, the acrylic emulsion-based polymer is a polymer obtained by polymerization using a chain transfer agent. As the chain transfer agent, for example, terpene-based compounds such as α-pinene, β-pinene, limonene, terpinolene, and the like can be preferably used. Further, compounds having a thiol group or a hydroxyl group are also commonly known.

Examples of the compounds having a thiol group include mercaptans such as lauryl mercaptan, 2-mercaptoethyl alcohol, dodecyl mercaptan (1-dodecanethiol), mercaptosuccinic acid, and the like; alkyl mercaptopropionates such as n-butyl mercaptopropionate, octyl mercaptopropionate, and the like; and alkoxyalkyl mercaptopropionates such as methoxybutyl mercaptopropionate. Examples of the compounds having a hydroxyl group include alcohols such as methyl alcohol, n-propyl alcohol, isopropyl alcohol (IPA), tert-butylalcohol, and benzyl alcohol, and the like.

The use amount of the chain transfer agent is preferably 0 to 1 part by weight per 100 parts by weight in total of the monomer mixture to be used for the emulsion polymerization. Adjustment of the use amount to 1 part by weight or lower can prevent deterioration of water-proofness, heat resistance and the like due to a decrease in molecular weight and can prevent occurrence of a problem of guide roll staining and therefore, it is preferable.

The emulsion polymerization of the acrylic emulsion-based polymer of the present invention is carried out by emulsifying monomer components in water by a conventional method and thereafter carrying out emulsion polymerization. Accordingly, a water dispersion (polymer emulsion) containing the acrylic emulsion-based polymer as a base polymer can be prepared. A method for the emulsion polymerization is not particularly limited, and examples thereof include known emulsion polymerization methods such as a batch loading method (batch polymerization method), a monomer dropping method, and a monomer emulsion dropping method. In the monomer dropping method and the monomer emulsion dropping method, continuous dropping (entire dropping) or separate dropping (including two-step dropping. Additionally, the separate dropping refers to dropping in which the dropping speed or the dropping amount is changed such that the primary dropping is slow and the secondary dropping is fast to separate the polymerization process) is selected properly; however, a particularly preferable method is continuous dropping (entire dropping). Employment of the continuous dropping (entire dropping) can adjust the average particle diameter of the acrylic emulsion-based polymer to be used for the present invention within a desired range and it is thus a preferable aspect. In addition, polymerization by two-step dropping may be referred to as two-step (dropping) polymerization.

To specifically explain the entire dropping polymerization, in the case of employing the entire dropping polymerization, an emulsifier in a sufficient amount for forming micelle does not exist in the reaction system (an aqueous solution mixed with a polymerization initiator) at the initial period of dropping, no reaction is thus caused (reaction of emulsion droppingpolymerization is caused in the inside of the emulsifier micelle), and when the monomer emulsion is dropped to a certain extent and the concentration thereof becomes enough for forming micelle (critical micelle concentration), a large quantity of monomers exist in the reaction system and therefore, the particle diameter becomes large when the reaction is caused. Accordingly, taking into consideration the critical micelle concentration of the emulsifier, the average particle diameter can be adjusted within a desired range by controlling the amount of the emulsifier to be loaded at the initial period. These methods can be combined properly. The reaction conditions may be selected properly and the polymerization temperature is preferably, for example, about 40 to 95°C and the polymerization time is preferably about 30 minutes to 24 hours. Further, the average particle diameter of the acrylic emulsion-based polymer can be adjusted by fastening the dropping speed of the monomer emulsion or increasing the polymerization temperature.

The average particle diameter of the emulsion particles can be controlled in accordance with the kind and concentration of an emulsifier to be added at the time of polymerization, the polymerization initiator concentration, and the like. Herein, the average particle diameter of the emulsion particles is based on the numeral value of the median diameter on the basis of volume obtained by measurement with a laser diffraction/scattering grain size distribution measuring apparatus.

A solvent-insoluble matter (the ratio of solvent-insoluble components, may be referred to as "gelation ratio") of the acrylic emulsion-based polymer of the present invention is preferably 70% (by weight) or more, more preferably 75% by weight or more, and furthermore preferably 80% by weight or more from the viewpoint of low staining properties and a proper peeling power (adhesive power). If the solvent-insoluble matter is lower than 70% by weight, since a large quantity of monomer is contained in the acrylic emulsion-based polymer and the low molecular weight components in the pressure-sensitive adhesive layer cannot be sufficiently reduced merely by crosslinking effect, the adherend staining derived from the low molecular weight components ore the like may be caused or the peeling power (adhesive power) may become too high. The solvent-insoluble matter may be controlled based on the polymerization initiator, the reaction temperature, the kinds of the emulsifier and raw material monomers, and the like. The upper limit of the solvent-insoluble matter is not particularly limited; however, it is for example 99% by weight. In the present invention, the solvent-insoluble matter of the acrylic emulsion-based polymer is a value calculated by the following "measurement method for solvent-insoluble matter".

[Measurement method for solvent-insoluble matter]

After about 0.1 g of an acrylic emulsion-based polymer is sampled and wrapped with a porous tetrafluoroethylene

sheet with an average pore diameter of 0.2 μm (trade name: "NTF1122", manufactured by NITTO DENKO CORPORATION), the wrapped body was tied with a kite string and the weight thereof is measured as a weight before immersion. The weight before immersion is the total weight of the acrylic emulsion-based polymer (sampled in the above), the tetrafluoroethylene sheet, and the kite string. The total weight of the tetrafluoroethylene sheet and the kite string is also measured as a wrapping weight.

Next, the acrylic emulsion-based polymer wrapped with the tetrafluoroethylene sheet and tied with the kite string (referred to as "sample") is put in a 50 ml container filled with ethyl acetate and allowed to stand still at 23°C for 7 days. Thereafter (after ethyl acetate treatment), the sample is taken out of the container and transferred to an aluminum cup and dried at 130°C for 2 hours in a drier to remove ethyl acetate. Successively, the weight is measured as a weight after immersion. The solvent-insoluble matter is calculated according to the following equation:

$$\text{Solvent-insoluble matter (\% by weight)} = (a - b)/(c - b) \times 100 \qquad (1)$$

wherein, a is weight after immersion; b is wrapping weight; and c is weight before immersion.

The weight average molecular weight (Mw) of a solvent-soluble matter (may be referred to as "sol matter") in the acrylic emulsion-based polymer of the present invention is preferably 40000 to 200000, more preferably 50000 to 150000, and furthermore preferably 60000 to 100000. If the weight average molecular weight of the solvent-soluble matter in the acrylic emulsion-based polymer is 40000 or more, the wettability of the pressure-sensitive adhesive composition to an adherend is improved and the tackiness to the adherend is improved. If the weight average molecular weight of the solvent-soluble matter in the acrylic emulsion-based polymer is 200000 or lower, the remaining amount of the pressure-sensitive adhesive composition on an adherend is decreased and the low staining properties for the adherend is improved. The weight average molecular weight of the solvent-soluble matter in the acrylic emulsion-based polymer can be measured by subjecting a sample (solvent-soluble matter of the acrylic emulsion-based polymer) obtained by air blow drying, under normal temperature, of the treated solution (ethyl acetate solution) after the ethyl acetate treatment, the solution being obtained in the measurement of the solvent-insoluble matter of the acrylic emulsion-based polymer, to GPC (gel permeation chromatography). Examples of the specific measurement method include the following methods.

[Measurement method for weight average molecular weight]

The GPC measurement is carried out using a GPC apparatus "HLC-8220 GPC" manufactured by TOSOH CORPORATION and the molecular weight is measured in terms of polystyrene. The measurement conditions are as follows.

Sample concentration: 0.2% by weight (THF solution)
Sample injection amount: 10 μl
Eluent: THF
Flow speed: 0.6 ml/minute
Measurement temperature: 40°C
Column:

  Sample column: one TSK guard column Super HZ-H + two TSK gel Super HZM-H
  Reference column: one TSK gel Super H-RC
  Detector: differential refractometer

[Water-insoluble crosslinking agent]

In the present invention, a crosslinking agent may be blended and preferably, it is a water-insoluble compound, which is a crosslinking agent (water-insoluble crosslinking agent) having two or more functional groups (e.g., 2 to 6) which can be reacted with a carboxyl group in the molecule (in one molecule), and more preferably the number of the functional groups which can be reacted with a carboxyl group in one molecule is 3 to 5. As the number of the functional groups which can be reacted with a carboxyl group in one molecule is higher, the pressure-sensitive adhesive composition is more densely crosslinked (that is, the crosslinked structure of a polymer constituting the pressure-sensitive adhesive layer becomes dense). Therefore, the wet spreading of the pressure-sensitive adhesive layer after the formation of the pressure-sensitive adhesive layer can be prevented. Further, the polymer forming the pressure-sensitive adhesive layer is bounded so that the functional groups (carboxyl groups) in the pressure-sensitive adhesive layer exist unevenly on

the adherend surface, and thus an increase in peeling power (adhesive power) between the pressure-sensitive adhesive layer and the adherend with the lapse of time can be prevented. On the other hand, in the case where the number of the functional groups which can be reacted with a carboxyl group in one molecule is too high beyond 6, a gelling product may be formed.

Examples of the functional group of the water-insoluble crosslinking agent which can be reacted with a carboxyl group include, but are not particularly limited to, an epoxy group, an isocyanate group, a carbodiimide group, and the like. Among them, from the viewpoint of reactivity, an epoxy group is preferable. Further, from the viewpoint of advantages in less remaining of unreacted products and low staining at the time of crosslinking reaction owing to high reactivity and from the viewpoint of capability of preventing an increase in peeling power (adhesive power) with the lapse of time between an adherend and the pressure-sensitive adhesive layer owing to an unreacted carboxyl group in the pressure-sensitive adhesive layer, a glycidylamino group is preferable. That is, as the water-insoluble crosslinking agent of the present invention, an epoxy-based crosslinking agent with epoxy group is preferable and particularly, a crosslinking agent with glycidylamino group (glycidylamino-based crosslinking agent)ispreferable. In the case where the water-insoluble crosslinking agent of the present invention is an epoxy-based crosslinking agent (particularly, glycidylamino-based crosslinking agent), the number of epoxy (particularly, glycidylamino) group in one molecule is 2 or more (e.g., 2 to 6) and preferably 3 to 5.

The water-insoluble crosslinking agent is a water-insoluble compound. Herein, "water-insoluble" refers to the solubility of 5 parts by weight or lower, preferably 3 parts by weight or lower, and more preferably 2 parts by weight or lower at 25°C in 100 parts by weight of water. Use of the water-insoluble crosslinking agent improves the low staining properties since the crosslinking agent remaining without crosslinking hardly causes whitening staining to be generated on an adherend under high humidity environments. In the case of a water-soluble crosslinking agent, the remaining crosslinking agent is dissolved in water and tends to be transferred easily to an adherend under high humidity environments and therefore, it easily causes whitening staining. Further, as compared with the water-soluble crosslinking agent, the water-insoluble crosslinking agent highly contributes to crosslinking reaction (reaction with carboxyl group) and highly effectively prevents an increase in peeling power (adhesive power) with the lapse of time. Further, due to high reactivity to crosslinking reaction, the water-insoluble crosslinking agent quickly promotes crosslinking reaction by aging and thus prevents an increase in peeling power (pressure-sensitive adhesive power) with the lapse of time between an adherend and the pressure-sensitive adhesive layer owing to an unreacted carboxyl group in the pressure-sensitive adhesive layer. In the case where the blend amount of the crosslinking agent is high, the peeling itself may becomes difficult and it is not preferable. The solubility of the crosslinking agent in water can be measured, for example, as follows.

[Measurement method for solubility in water]

Water (25°C) and a crosslinking agent in the same weight are mixed by a stirrer at a rotation rate of 300 rpm for 10 minutes and a water phase and an oil phase are separated by centrifugal separation. Next, the water phase is sampled and dried at 120°C for 1 hour, and the non-volatile matter in the water phase is measured based on the drying weight loss (parts by weight of non-volatile matter per 100 parts by weight of water).

Specifically, examples of the water-insoluble crosslinking agent of the present invention include glycidylamino-based crosslinking agents such as 1,3-bis(N,N-diglycidylaminomethyl)cyclohexane (e.g., trade name "TETRAD-C" etc., manufactured by MITSUBISHI GAS CHEMICAL COMPANY, INC.) [solubility of 2 parts by weight or lower in 100 parts by weight of water at 25°C] and 1,3-bis(N,N-diglycidylaminomethyl)benzene (trade name "TETRAD-X"etc.,manufactured by MITSUBISHIGAS CHEMICAL COMPANY, INC.) [solubility of 2 parts by weight or lower in 100 parts by weight of water at 25°C] ; other epoxy-basedcrosslinking agents such as tris(2,3-epoxypropyl)isocyanurate (e.g., trade name: "TEPIC-G", manufactured by NISSAN CHEMICAL INDUSTRIES, LTD.) [solubility of 2 parts by weight or lower in 100 parts by weight of water at 25°C]; and the like.

The blend amount of the water-insoluble crosslinking agent of the present invention (content thereof in the pressure-sensitive adhesive composition of the present invention) is preferably adjusted such that the number of moles of the functional group of the water-insoluble crosslinking agent of the present invention which can be reacted with a carboxyl group is 0.3 to 1.3 mol per 1 mol of the carboxyl group of the carboxyl-containing unsaturated monomer (ii) used as a raw material monomer for the acrylic emulsion-based polymer of the present invention. That is, the ratio [functional group which can be reacted with carboxyl group/carboxyl group] (mole ratio) of "total number of moles of functional group of water-insoluble crosslinking agent of present invention which can be reacted with carboxyl group" to "total number of moles of carboxyl groups of carboxyl-containing unsaturated monomer (ii) used as raw material monomer for acrylic emulsion-based polymer of present invention" is preferably 0.3 to 1.3, more preferably 0.3 to 1.1, and furthermore preferably 0.3 to 1.0. Adjustment of the [functional group which can be reacted with carboxyl group /carboxyl] to 0.3 or higher makes it possible to decrease unreacted carboxyl groups in the pressure-sensitive adhesive layer and to prevent an increase in peeling power (adhesive power) with the lapse of time attributed to the interaction between a carboxyl group and an adherend and therefore, it is preferable. Further, adjustment thereof to 1.3 or lower

makes it possible to decrease the unreacted water-insoluble crosslinking agent in the pressure-sensitive adhesive layer, to suppress appearance deterioration due to the water-insoluble crosslinking agent, and to improve the appearance characteristics and therefore, it is preferable.

Particularly, in the case where the water-insoluble crosslinking agent of the present invention is an epoxy-based crosslinking agent, [epoxy group/carboxyl group] (mole ratio) is preferably 0.3 to 1.3, more preferably 0.3 to 1.1, and furthermore preferably 0.3 to 1.0. In the case where the water-insoluble crosslinking agent of the present invention is a glycidylamino-based crosslinking agent, [glycidylamino group/carboxyl group] (mole ratio) preferably satisfies the above-mentioned range.

For example, in the case where 4 g of a water-insoluble crosslinking agent with a functional group equivalent of 110 (g/eq) of the functional group which can be reacted with a carboxyl group is added (blended) in the pressure-sensitive adhesive composition, the number of moles of the functional group of the water-insoluble crosslinking agent which can be reacted with a carboxyl group can be calculated as follows.

Number of moles of functional group of water-insoluble crosslinking agent which can be reacted with carboxyl group = [blend amount (blend amount) of water-insoluble crosslinking agent]/[functional group equivalent] = 4/110.

For example, in the case where 4 g of an epoxy-based crosslinking agent with an epoxy equivalent of 110 (g/eq) is added (blended) as a water-insoluble crosslinking agent, the number of moles of an epoxy group of the epoxy-based crosslinking agent is calculated, for example, as follows.

Number of moles of epoxy group of epoxy-based crosslinking agent = [blend amount (blend amount) of epoxy-based crosslinking agent]/[epoxy equivalent] = 4/110.

[Ionic compound]

The re-peelable water dispersion type acryl-based pressure-sensitive adhesive composition of the present invention contains an ionic compound as an indispensable component. The ionic compound is an ionic liquid and/or an alkali metal salt. Additionof these ionic compounds can give excellent antistatic properties. These compounds may be used alone or in combination of two or more thereof (e.g., a combination of an ionic liquid and an alkali metal salt).

[Ionic liquid]

An ionic liquid in the present invention refers to a molten salt (ionic compound) in a liquid state at 25°C and it is not particularly limited, but those which are composed of an organic cationic component represented by the following formulas (A) to (E) and an anionic component are preferably used due to the reason that excellent antistatic capability can be obtained.

[Formula 3]

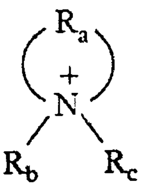

(A)

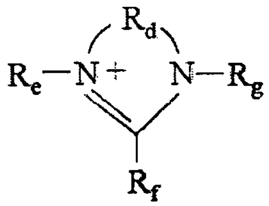

(B)

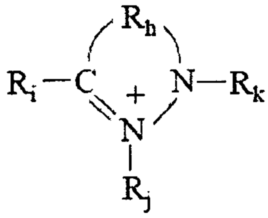

(C)

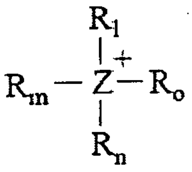

(D)

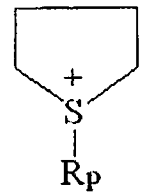

(E)

In the formula (A), $R_a$ represents a hydrocarbon group with 4 to 20 carbon atoms or a portion of the hydrocarbon group is optionally substituted with a heteroatom; and $R_b$ and $R_c$ are the same or different, and each represent hydrogen or a hydrocarbon group with 1 to 16 carbon atoms, or a portion of the hydrocarbon group is optionally substituted with a heteroatom; provided that the nitrogen atom contains a double bond, there is no $R_c$.

In the formula (B), $R_d$ represents a hydrocarbon group with 2 to 20 carbon atoms or a portion of the hydrocarbon group is optionally substituted with a heteroatom; and $R_e$, $R_f$, and Rg are the same or different, and each represent hydrogen or a hydrocarbon group with 1 to 16 carbon atoms, or a portion of the hydrocarbon group is optionally substituted with a heteroatom.

In the formula (C), $R_h$ represents a hydrocarbon group with 2 to 20 carbon atoms or a portion of the hydrocarbon group is optionally substituted with a heteroatom; and $R_i$, $R_j$, and $R_k$ are the same or different, and each represent hydrogen or a hydrocarbon group with 1 to 16 carbon atoms, or a portion of the hydrocarbon group is optionally substituted with a heteroatom.

In the formula (D), Z represents a nitrogen, sulfur or phosphorus atom; $R_l$, $R_m$, $R_n$, and $R_o$ are the same or different, and each represent a hydrocarbon group with 1 to 20 carbon atoms or a portion of the hydrocarbon group is optionally substituted with a heteroatom; provided that Z is a sulfur atom, there is no $R_o$.

In the formula (E), Rp represents a hydrocarbon group with 1 to 18 carbon atoms or is optionally a functional group formed by partially substituting the hydrocarbon group with a heteroatom.

Examples of the cation represented by the formula (A) include a pyridinium cation, a piperidinium cation, a pyrrolidinium cation, a cation having a pyrroline skeleton, a cation having a pyrrole skeleton, a morpholinium cation, and the like.

Specific examples thereof include 1-ethylpyridinium cation, 1-butylpyridinium cation, 1-hexylpyridinium cation, 1-butyl-3-methylpyridinium cation, 1-butyl-4-methylpyridinium cation, 1-hexyl-3-methylpyridinium cation, 1-butyl-3,4-dimethylpyridinium cation, 1-ethyl-3-hydroxymethylpyridinium cation, 1,1-dimethylpyrrolidinium cation, 1-ethyl-1-methylpyrrolidinium cation, 1-methyl-1-propylpyrrolidinium cation, 1-methyl-1-butylpyrrolidinium cation, 1-methyl-1-pentylpyrrolidinium cation, 1-methyl-1-hexylpyrrolidinium cation, 1-methyl-1-heptylpyrrolidinium cation, 1-ethyl-1-propylpyrrolidinium cation, 1-ethyl-1-butylpyrrolidinium cation, 1-ethyl-1-pentylpyrrolidinium cation, 1-ethyl-1-hexylpyrrolidinium cation, 1-ethyl-1-heptylpyrrolidinium cation, 1,1-dipropylpyrrolidinium cation, 1-propyl-1-butylpyrrolidinium cation, 1,1-dibutylpyrrolidinium cation, 1-propylpiperidinium cation, 1-pentylpiperidinium cation, 1,1-dimethylpiperidinium cation, 1-methyl-1-ethylpiperidinium cation, 1-methyl-1-propylpiperidinium cation, 1-methyl-1-butylpiperidinium cation, 1-methyl-1-pentylpiperidinium cation, 1-methyl-1-hexylpiperidinium cation, 1-methyl-1-heptylpiperidinium cation, 1-ethyl-1-propylpiperidinium cation, 1-ethyl-1-butylpiperidinium cation, 1-ethyl-1-pentylpiperidinium cation, 1-ethyl-1-hexylpiperidinium cation, 1-ethyl-1-heptylpiperidinium cation, 1,1-dipropylpiperidinium cation, 1-propyl-1-butylpiperidinium cation, 1,1-dibutylpiperidinium cation, 2-methyl-1-pyrroline cation, 1-ethyl-2-phenylindole cation, 1,2-dimethylindole cation, 1-ethylcarbazole cation, and N-ethyl-N-methylmorpholinium cation.

Examples of the cation represented by the formula (B) include an imidazolium cation, a tetrahydropyrimidinium cation, a dihydropyrimidinium cation, and the like.

Specific examples thereof include 1,3-dimethylimidazolium cation, 1,3-diethylimidazolium cation, 1-ethyl-3-methylimidazolium cation, 1-butyl-3-methylimidazolium cation, 1-hexyl-3-methylimidazolium cation, 1-octyl-3-methylimidazolium cation, 1-decyl-3-methylimidazolium cation, 1-dodecyl-3-methylimidazolium cation, 1-tetradecyl-3-methylimidazolium cation, 1,2-dimethyl-3-propylimidazolium cation, 1-ethyl-2,3-dimethylimidazolium cation, 1-butyl-2,3-dimethylimidazolium cation, 1-hexyl-2,3-dimethylimidazolium cation, 1-(2-hydroxyethyl)-3-methylimidazolium cation, 1-allyl-3-methylimidazolium cation, 1,3-dimethyl-1,4,5,6-tetrahydropyrimidinium cation, 1,2,3-trimethyl-1,4,5,6-tetrahydropyrimidinium cation, 1,2,3,4-tetramethyl-1,4,5,6-tetrahydropyrimidinium cation, 1,2,3,5-tetramethyl-1,4,5,6-tetrahydropyrimidinium cation, 1,3-dimethyl-1,4-dihydropyrimidinium cation, 1,3-dimethyl-1,6-dihydropyrimidinium cation, 1,2,3-trimethyl-1,4-dihydropyrimidinium cation, 1,2,3-trimethyl-1,6-dihydropyrimidinium cation, 1,2,3,4-tetramethyl-1,4-dihydropyrimidinium cation, 1,2,3,4-tetramethyl-1,6-dihydropyrimidinium cation, and the like.

Examples of the cation represented by the formula (C) include apyrazolium cation, apyrazolinium cation, and the like.

Specific examples thereof include 1-methylpyrazolium cation, 3-methylpyrazolium cation, 1-ethyl-2-methylpyrazolinium cation, 1-ethyl-2,3,5-trimethylpyrazolium cation, 1-propyl-2,3,5-trimethylpyrazolium cation, 1-butyl-2,3,5-trimethylpyrazolium cation, 1-ethyl-2,3,5-trimethylpyrazolinium cation, 1-propyl-2,3,5-trimethylpyrazolinium cation, 1-butyl-2,3,5-trimethylpyrazolinium cation, and the like.

Examples of the cation represented by the formula (D) include a tetraalkylammonium cation, a trialkylsulfonium cation, a tetraalkylphosphonium cation and those which can be obtained by substituting a portion of the alkyl group with an alkenyl group, an alkoxyl group, a hydroxyl group, a cyano group and also an epoxy group.

Specific examples thereof include tetramethylammonium cation, tetraethylammonium cation, tetrabutylammonium cation, tetrapentylammonium cation, tetrahexylammonium cation, tetraheptylammonium cation, triethylmethylammonium cation, tributylethylammonium cation, trimethyldecylammonium cation, N,N-diethyl-N-methyl-N-(2-methoxyethyl)ammonium cation, glycidyltrimethylammonium cation, trimethylsulfonium cation, triethylsulfonium cation, tributylsulfonium cation, trihexylsulfonium cation, diethylmethylsulfonium cation, dibutylethylsulfonium cation, dimethyldecylsulfonium cation, tetramethylphosphonium cation, tetraethylphosphonium cation, tetrabutylphosphonium cation, tetrahexylphosphonium cation, tetraoctylphosphonium cation, triethylmethylphosphonium cation, tributylethylphosphonium cation, trimethyldecylphosphonium cation, diallyldimethylammonium cation, and the like. Among them, preferably used are an asymmetric tetraalkylammonium cation, a trialkylsulfonium cation, and a tetraalkylphosphonium cation such as triethylmethylammonium cation, tributylethylammonium cation, trimethyldecylammonium cation, diethylmethylsulfonium cation, dibutylethylsulfonium cation, dimethyldecylsulfonium cation, triethylmethylphosphonium cation, tributylethylphosphonium cation, and trimethyldecylphosphonium cation, as well as N,N-diethyl-N-methyl-N-(2-methoxyethyl)ammonium cation, glycidyltrimethylammonium cation, diallyldimethylammonium cation, N,N-dimethyl-N-ethyl-N-propylammonium cation, N,N-dimethyl-N-ethyl-N-butylammonium cation, N,N-dimethyl-N-ethyl-N-pentylammonium cation, N,N-dimethyl-N-ethyl-N-hexylammonium cation, N,N-dimethyl-N-ethyl-N-heptylammonium cation, N,N-dimethyl-N-ethyl-N-nonylammonium cation, N,N-dimethyl-N,N-dipropylammonium cation, N,N-diethyl-N-propyl-N-butylammonium cation, N,N-dimethyl-N-propyl-N-pentylammonium cation, N,N-dimethyl-N-propyl-N-hexylammonium cation, N,N-dimethyl-N-propyl-N-heptylammonium cation, N,N-dimethyl-N-butyl-N-hexylammonium cation, N,N-diethyl-N-butyl-N-heptylammonium cation, N,N-dimethyl-N-pentyl-N-hexylammonium cation, N,N-dimethyl-N,N-dihexylammonium cation, trimethylheptylammonium cation,

N,N-diethyl-N-methyl-N-propylammonium cation, N,N-diethyl-N-methyl-N-pentylammonium cation, N,N-diethyl-N-methyl-N-heptylammonium cation, N,N-diethyl-N-propyl-N-pentylammonium cation, triethylpropylammonium cation,triethylpentylammonium cation, triethylheptylammonium cation, N,N-dipropyl-N-methyl-N-ethylammonium cation, N,N-dipropyl-N-methyl-N-pentylammonium cation, N,N-dipropyl-N-butyl-N-hexylammonium cation, N,N-dipropyl-N,N-dihexylammonium cation, N,N-dibutyl-N-methyl-N-pentylammonium cation, N,N-dibutyl-N-methyl-N-hexylammonium cation, trioctylmethylammonium cation, N-methyl-N-ethyl-N-propyl-N-pentylammonium cation, and choline cation.

Examples of the cation represented by the formula (E) include a sulfonium cation and the like. Specific examples of Rp in the formula (E) include a methyl group, an ethyl group, a propyl group, a butyl group, a hexyl group, an octyl group, a nonyl group, a decyl group, a dodecyl group, a tridecyl group, a tetradecyl group, an octadecyl group, and the like.

It is preferable that in the water dispersion type acryl-based pressure-sensitive adhesive composition of the present invention, the cation of the ionic liquid is at least one kind cation selected from the group consisting of imidazolium-containing salt type, pyridinium-containing salt type, morpholinium-containing salt type, pyrrolidinium-containing salt type, piperidinium-containing salt type, ammonium-containing salt type, phosphonium-containing salt type, and sulfonium-containing salt type. The ionic liquid falls under those containing cations represented by the above formulas (A), (B), and (D).

It is preferable that in the water dispersion type acryl-based pressure-sensitive adhesive composition of the present invention, the ionic liquid contains at least one kind cation selected from the group consisting of cations represented by the following formulas (a) to (d). These cations are those represented by the above formulas (A) and (B):

[Formula 4]

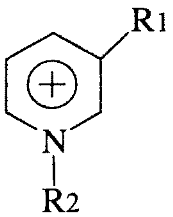
(a)
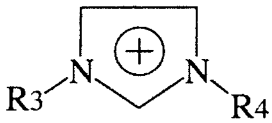
(b)
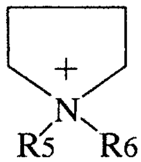
(c)
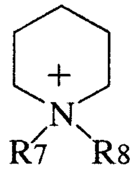
(d)

In the formula (a), $R_1$ represents hydrogen or a hydrocarbon group with 1 to 3 carbon atoms, preferably hydrogen or a hydrocarbon group with 1 carbon atom; and $R_2$ represents hydrogen or a hydrocarbon group with 1 to 7 carbon atoms, preferably a hydrocarbon group with 1 to 6 carbon atoms, and more preferably a hydrocarbon group with 1 to 4 carbon atoms.

In the formula (b), $R_3$ represents hydrogen or a hydrocarbon group with 1 to 3 carbon atoms, preferably hydrogen or a hydrocarbon group with 1 carbon atom; and $R_4$ represents hydrogen or a hydrocarbon group with 1 to 7 carbon atoms, preferably a hydrocarbon group with 1 to 6 carbon atoms, and more preferably a hydrocarbon group with 1 to 4 carbon atoms.

In the formula (c), $R_5$ represents hydrogen or a hydrocarbon group with 1 to 3 carbon atoms, preferably hydrogen or a hydrocarbon group with 1 carbon atom; and $R_6$ represents hydrogen or a hydrocarbon group with 1 to 7 carbon atoms, preferably a hydrocarbon group with 1 to 6 carbon atoms, and more preferably a hydrocarbon group with 1 to 4 carbon atoms.

In the formula (d), $R_7$ represents hydrogen or a hydrocarbon group with 1 to 3 carbon atoms, preferably hydrogen or a hydrocarbon group with 1 carbon atom; and $R_8$ represents hydrogen or a hydrocarbon group with 1 to 7 carbon atoms, preferably a hydrocarbon group with 1 to 6 carbon atoms, and more preferably a hydrocarbon group with 1 to 4 carbon atoms.

On the other hand, the anionic component is not particularly limited as long as it can be an ionic liquid, and examples thereof include $Cl^-$, $Br^-$, $I^-$, $AlCl_4^-$, $Al_2Cl_7^-$, $BF_4^-$, $PF_6^-$, $ClO_4^-$, $NO_3^-$, $CH_3COO^-$, $CF_3COO^-$, $CH_3SO_3^-$, $CF_3SO_3^-$, $(CF_3SO_2)_2N^-$, $(CF_3SO_2)_3C^-$, $AsF_6^-$, $SbF_6^-$, $NbF_6^-$, $TaF_6^-$, $F(HF)_n^-$, $(CN)_2N^-$, $C_4F_9SO_3^-$, $(C_2F_5SO_2)_2N^-$, $C_3F_7COO^-$, $(CF_3SO_2)(CF_3CO)N^-$, $SCN^-$, $C_2F_5SO_3$, $C_3F_7SO_3^-$, $C_4F_9SO_3^-$, $(FSO_2)_2N^-$, $(C_3F_7SO_2)_2N^-$, $(C_4F_9SO_2)_2N^-$, $(CH_3O)_2PO_2^-$, $(C_2H_5O)_2PO_2^-$, $(CN)_2N^-$, $(CN)_3C^-$, $CH_3OSO_3^-$, $C_4H_9OSO_3^-$, $C_2H_5OSO_3^-$, n-$C_6H_{13}OSO_3^-$, n-$C_8H_{17}OSO_3^-$, $CH_3(OC_2H_4)_2OSO_3^-$, $(C_2F_5)_3PF_3^-$, $CH_3C_6H_4SO_3^-$, and the like. Among them, particularly, many imide-containing anionic components provide hydrophobicity, cause no dissociation even if added to a water dispersion type pressure-sensitive adhesive, generate no agglomerate and the like and therefore, they are preferably used. Further, a sulfonyl-containing anionic component is excellent in stability in water, electric conductivity, heat stability or the like and therefore, it is preferably used. Further, a fluoroalkyl-containing anionic component containing a fluorine atom provides an ionic compound with a low melting point and therefore, it is preferably used.

Ananiondefinedby the following formula (F) is also usable as the anionic component.

[Formula 5]

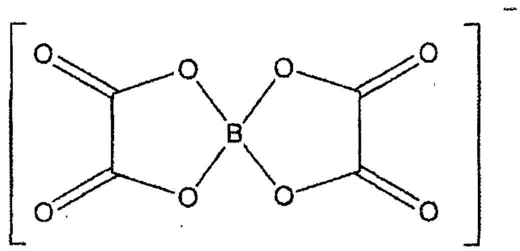
(F)

The ionic liquid used in the present invention is properly selected from combinations of the above cationic components and anionic components, and specific examples thereof include 1-butylpyridinium tetrafluoroborate, 1-butylpyridinium hexafluorophosphate, 1-butyl-3-methylpyridinium tetrafluoroborate, 1-butyl-3-methylpyridinium trifluoromethanesulfonate, 1-butyl-3-methylpyridinium bis(trifluoromethanesulfonyl)imide, 1-butyl-3-methylpyridinium bis(pentafluoroethanesulfonyl)imide, 1-hexylpyridinium tetrafluoroborate, 1,1-dimethylpyrrolidinium bis(trifluoromethanesulfonyl)imide, 1-methyl-1-ethylpyrrolidinium bis(trifluoromethanesulfonyl)imide, 1-methyl-1-propylpyrrolidinium bis(trifluoromethanesulfonyl)imide, 1-methyl-1-butylpyrrolidinium bis(trifluoromethanesulfonyl)imide, 1-methyl-1-pentylpyrrolidinium bis(trifluoromethanesulfonyl)imide, 1-methyl-1-hexylpyrrolidinium bis(trifluoromethanesulfonyl)imide, 1-methyl-1-heptylpyrrolidinium bis(trifluoromethanesulfonyl)imide, 1-ethyl-1-propylpyrrolidinium bis(trifluoromethanesulfonyl)imide, 1-ethyl-1-butylpyrrolidinium bis(trifluoromethanesulfonyl)imide, 1-ethyl-1-pentylpyrrolidinium bis(trifluoromethanesulfonyl)imide, 1-ethyl-1-hexylpyrrolidinium bis(trifluoromethanesulfonyl)imide, 1-ethyl-1-heptylpyrrolidinium bis(trifluoromethanesulfonyl)imide, 1,1-dipropylpyrrolidinium bis(trifluoromethanesulfonyl)imide, 1-propyl-1-butylpyrrolidinium bis(trifluoromethanesulfonyl)imide, 1,1-dibutylpyrrolidinium bis(trifluoromethanesulfonyl)imide, 1-propylpiperidinium bis(trifluoromethanesulfonyl)imide, 1-pentylpiperidinium bis(trifluoromethanesulfonyl)imide, 1, 1-dimethylpiperidinium bis(trifluoromethanesulfonyl)imide, 1-methyl-1-ethylpiperidinium bis(trifluoromethanesulfonyl)imide, 1-methyl-1-propylpiperidinium bis(trifluoromethanesulfonyl)imide, 1-methyl-1-butylpiperidinium bis(trifluoromethanesulfonyl)imide, 1-methyl-1-pentylpiperidinium bis(trifluoromethanesulfonyl)imide, 1-methyl-1-hexylpiperidinium bis(trifluoromethanesulfonyl)imide, 1-methyl-1-heptylpiperidinium bis(trifluoromethanesulfonyl)imide, 1-ethyl-1-propylpiperidinium bis(trifluoromethanesulfonyl)imide, 1-ethyl-1-butylpiperidinium bis(trifluoromethanesulfonyl)imide, 1-ethyl-1-pentylpiperidinium bis(trifluoromethanesulfonyl)imide, 1-ethyl-1-hexylpiperidinium bis(trifluoromethanesulfonyl)imide, 1-ethyl-1-heptylpiperidinium bis(trifluoromethanesulfonyl)imide, 1,1-dipropylpiperidinium bis(trifluoromethanesulfonyl)imide, 1-propyl-1-butylpiperidinium bis(trifluoromethanesulfonyl)imide, 1,1-dibutylpiperidinium bis(trifluoromethanesulfonyl)imide, 1,1-dimethylpyrrolidinium bis(pentafluoroethanesulfonyl)imide, 1-methyl-1-ethylpyrrolidinium bis(pentafluoroethanesulfonyl)imide, 1-methyl-1-propylpyrrolidinium bis(pentafluoroethanesulfonyl)imide, 1-methyl-1-butylpyrrolidinium bis(pentafluoroethanesulfonyl)imide, 1-methyl-1-pentylpyrrolidinium bis(pentafluoroethanesulfonyl)imide, 1-methyl-1-hexylpyrrolidinium bis(pentafluoroethanesulfonyl)imide, 1-methyl-1-heptylpyrrolidinium bis(pentafluoroethanesulfonyl)imide, 1-ethyl-1-propylpyrrolidinium bis(pentafluoroethanesulfonyl)imide, 1-ethyl-1-butylpyrrolidinium bis(pentafluoroethanesulfonyl)imide, 1-ethyl-1-pentylpyrrolidinium bis(pentafluoroethanesulfonyl)imide, 1-ethyl-1-hexylpyrrolidinium bis(pentafluoroethanesulfonyl)imide, 1-ethyl-1-heptylpyrrolidinium bis(pentafluoroethanesulfonyl)imide, 1,1-dipropylpyrrolidinium bis(pentafluoroethanesulfonyl)imide, 1-propyl-1-butylpyrrolidinium bis(pentafluoroethanesulfonyl)imide, 1,1-dibutylpyrrolidinium bis(pentafluoroethanesulfonyl)imide, 1-propylpiperidinium bis(pentafluoroethanesulfonyl)imide, 1-pentylpiperidinium bis(pentafluoroethanesulfonyl)imide, 1,1-dimethylpiperidinium bis(pentafluoroethanesulfonyl)imide, 1-methyl-1-ethylpiperidinium bis(pentafluoroethanesulfonyl)imide, 1-methyl-1-propylpiperidinium bis(pentafluoroethanesulfonyl)imide, 1-methyl-1-butylpiperidinium bis(pentafluoroethanesulfonyl)imide, 1-methyl-1-pentylpiperidinium bis(pentafluoroethanesulfonyl)imide, 1-methyl-1-hexylpiperidinium bis(pentafluoroethanesulfonyl)imide, 1-methyl-1-heptylpiperidinium bis(pentafluoroethanesulfonyl)imide, 1-ethyl-1-propylpiperidinium bis(pentafluoroethanesulfonyl)imide, 1-ethyl-1-butylpiperidinium bis(pentafluoroethanesulfonyl)imide, 1-ethyl-1-pentylpiperidinium bis(pentafluoroethanesulfonyl)imide, 1-ethyl-1-hexylpiperidinium bis(pentafluoroethanesulfonyl)imide, 1-ethyl-1-heptylpiperidinium bis(pentafluoroethanesulfonyl)imide, 1,1-dipropylpiperidinium bis(pentafluoroethanesulfonyl)imide, 1-propyl-1-butylpiperidinium bis(pentafluoroethanesulfonyl)imide, 1,1-dibutylpiperidinium bis(pentafluoroethanesulfonyl)imide, 2-methyl-1-pyrroline tetrafluoroborate, 1-ethyl-2-phenylindole tetrafluoroborate, 1,2-dimethylindole tetrafluoroborate, 1-ethylcarbazole tetrafluoroborate, 1-ethyl-3-methylimidazolium tetrafluoroborate, 1-ethyl-3-methylimidazolium acetate, 1-ethyl-3-methylimidazolium trifluoroacetate, 1-ethyl-3-methylimidazolium heptafluorobutyrate, 1-ethyl-3-methylimidazolium trifluoromethanesulfonate, 1-ethyl-3-methylimidazolium perfluorobutanesulfonate, 1-ethyl-3-methylimidazolium dicyanamide, 1-ethyl-3-methylimidazolium bis(trifluoromethanesulfonyl)imide, 1-ethyl-3-methylimidazolium bis(pentafluoroethanesulfonyl)imide, 1-ethyl-3-methylimidazolium tris(trifluoromethanesulfonyl)methide, 1-butyl-3-methylimidazolium tetrafluoroborate, 1-butyl-3-methylimidazolium hexafluorophosphate, 1-butyl-3-methylimidazolium trifluoroacetate, 1-butyl-3-methylimidazolium heptafluorobutyrate, 1-butyl-3-methylimidazolium trifluoromethanesulfonate, 1-butyl-3-methylimidazolium perfluorobutanesulfonate, 1-butyl-3-methylimidazolium bis(trifluoromethanesulfonyl)imide, 1-hexyl-3-methylimidazolium bromide, 1-hexyl-3-methylimidazolium chloride, 1-hexyl-3-methylimidazolium tetrafluoroborate, 1-hexyl-3-methylimidazolium hexafluorophosphate, 1-hexyl-3-methylimidazolium trifluoromethanesulfonate, 1-octyl-3-methylimidazolium tetrafluoroborate, 1-octyl-3-methylimidazolium hexafluorophosphate, 1-hexyl-2,3-dimethylimidazolium tetrafluoroborate, 1,2-dimethyl-3-propylimidazolium bis(trifluoromethanesulfonyl)imide, 1-methylpyrazolium tetrafluoroborate, 2-methylpyrazolium tetrafluoroborate, 1-ethyl-2,3,5-trimethylpyrazolium bis(trifluoromethanesulfonyl)imide, 1-propyl-2,3,5-trimethylpyrazolium bis(trifluoromethanesulfonyl)imide, 1-butyl-2,3,5-trimethylpyrazolium bis(trifluoromethanesulfonyl)imide, 1-ethyl-2,3,5-trimethylpyrazolium bis(pentafluoroethanesulfonyl)imide, 1-propyl-2,3,5-trimethylpyrazolium bis(pentafluoroethanesulfonyl)imide, 1-butyl-2,3,5-trimethylpyrazolium bis(pentafluoroethanesulfonyl)imide, 1-ethyl-2,3,5-trimethylpyrazolium bis(trifluoromethanesulfonyl)trifluoroacetamide, 1-propyl-2,3,5-trimethylpyrazolium bis(trifluoromethanesulfonyl)trifluoroacetamide, 1-butyl-2,3,5-trimethylpyrazolium bis(trifluoromethanesulfonyl)trifluoroacetamide, 1-ethyl-2,3,5-trimethylpyrazolinium bis(trifluoromethanesulfonyl)imide, 1-propyl-2,3,5-trimethylpyrazolinium bis(trifluoromethanesulfonyl)imide, 1-butyl-2,3,5-trimethylpyrazolinium bis(trifluoromethanesulfonyl)imide, 1-ethyl-2,3,5-trimethylpyrazolinium bis(pentafluoroethanesulfonyl)imide, 1-propyl-2,3,5-trimethylpyrazolinium bis(pentafluoroethanesulfonyl)imide, 1-butyl-2,3,5-trimethylpyrazolinium bis(pentafluoroethanesulfonyl)imide, 1-ethyl-2,3,5-trimethylpyrazolinium bis(trifluoromethanesulfonyl)trifluoroacetamide, 1-propyl-2,3,5-trimethylpyrazolinium bis(trifluoromethanesulfonyl)trifluoroacetamide, 1-butyl-2,3,5-trimethylpyrazolinium bis(trifluoromethanesulfonyl)trifluoroacetamide, tetrapentylammonium trifluoromethanesulfonate, tetrapentylammonium bis(trifluoromethanesulfonyl)imide, tetrahexylammonium trifluoromethanesulfonate, tetrahexylammonium bis(trifluoromethanesulfonyl)imide, tetrabutylammonium trifluoromethanesulfonate, tetraheptylammonium bis(trifluoromethanesulfonyl)imide, diallyldimethylammonium tetrafluoroborate, diallyldimethylammonium trifluoromethanesulfonate, diallyldimethylammonium bis(trifluoromethanesulfonyl)imide, diallyldimethylammonium bis(pentafluoroethanesulfonyl)imide, N,N-diethyl-N-methyl-N-(2-methoxyethyl)ammonium tetrafluoroborate, N,N-diethyl-N-methyl-N-(2-methoxyethyl)ammonium trifluoromethanesulfonate, N,N-diethyl-N-methyl-N-(2-methoxyethyl)ammonium bis(trifluoromethanesulfonyl)imide, N,N-diethyl-N-methyl-N-(2-methoxyethyl)ammonium bis(pentafluoroethanesulfonyl)imide, glycidyltrimethylammonium trifluoromethanesulfonate, glycidyltrimethylammonium bis(trifluoromethanesulfonyl)imide, glycidyltrimethylammonium bis(pentafluoroethanesulfonyl)imide, tetraoctylphosphonium trifluoromethanesulfonate, tetraoctylphosphonium bis(trifluoromethanesulfonyl)imide, N,N-dimethyl-N-ethyl-N-propylammonium bis(trifluoromethanesulfonyl)imide, N,N-dimethyl-N-ethyl-N-butylammonium bis(trifluoromethanesulfonyl)imide, N,N-dimethyl-N-ethyl-N-pentylammonium bis(trifluoromethanesulfonyl)imide, N,N-dimethyl-N-ethyl-N-hexylammonium bis(trifluoromethanesulfonyl)imide, N,N-dimethyl-N-ethyl-N-heptylammonium bis(trifluoromethanesulfonyl)imide, N,N-dimethyl-N-ethyl-N-nonylammonium bis(trifluoromethanesulfonyl)imide, N,N-dimethyl-N,N-dipropylammonium bis(trifluoromethanesulfonyl)imide, N,N-dimethyl-N-propyl-N-butylammonium bis(trifluoromethanesulfonyl)imide, N,N-dimethyl-N-propyl-N-pentylammonium bis(trifluoromethanesulfonyl)imide, N,N-dimethyl-N-propyl-N-hexylammonium bis(trifluoromethanesulfonyl)imide, N,N-dimethyl-N-propyl-N-heptylammonium bis(trifluoromethanesulfonyl)imide, N,N-dimethyl-N-butyl-N-hexylammonium bis(trifluoromethanesulfonyl)imide, N,N-dimethyl-N-butyl-N-heptylammonium bis(trifluoromethanesulfonyl)imide, N,N-dimethyl-N-pentyl-N-hexylammonium bis(trifluoromethanesulfonyl)imide, N,N-dimethyl-N,N-dihexylammonium bis(trifluoromethanesulfonyl)imide, trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-heptylammonium bis(trifluoromethanesulfonyl)imide, N,N-diethyl-N-propyl-N-pentylammonium bis(trifluoromethanesulfonyl)imide, triethylpropylammonium bis(trifluoromethanesulfonyl)imide, triethylpentylammonium bis(trifluoromethanesulfonyl)imide, triethylheptylammonium bis(trifluoromethanesulfonyl)imide, N,N-dipropyl-N-methyl-N-ethylammonium bis(trifluoromethanesulfonyl)imide, N,N-dipropyl-N-methyl-N-pentylammonium bis(trifluoromethanesulfonyl)imide, N,N-dipropyl-N-butyl-N-hexylammonium bis(trifluoromethanesulfonyl)imide, N,N-dipropyl-N,N-dihexylammonium bis(trifluoromethanesulfonyl)imide, N,N-dibutyl-N-methyl-N-pentylammonium bis(trifluoromethanesulfonyl)imide, N,N-dibutyl-N-methyl-N-hexylammonium bis(trifluoromethanesulfonyl)imide, trioctylmethylammonium bis(trifluoromethanesulfonyl)imide, N-methyl-N-ethyl-N-propyl-N-pentylammonium bis(trifluoromethanesulfonyl)imide, 1-butylpyridinium (trifluoromethanesulfonyl)trifluoroacetamide, 1-butyl-3-methylpyridinium (trifluoromethanesulfonyl)trifluoroacetamide, 1-ethyl-3-methylimidazolium (trifluoromethanesulfonyl)trifluoroacetamide, N-ethyl-N-methylmorpholinium thiocyanate, 4-ethyl-4-methylmorpholinium methylcarbonate, 1-ethyl-3-methylimidazolium thiocyanate, 1-butyl-3-methylimidazolium thiocyanate, 1-ethyl-3-methylimidazolium tetracyanoborate, 1-ethyl-3-methylimidazolium tris(pentafluoroethyl)trifluorophosphate, 1-ethyl-3-methylimidazolium bis(fluorosulfonyl)imide, triethylsulfonium bis (trifluoromethylsulfonyl)imide, and the like.

Commercializedproducts maybe used as the above-mentioned ionic liquid and those which are synthesized as follows are also usable. A method for synthesizing an ionic liquid is not particularly limited as long as the method gives an aimed ionic liquid, and in general, a halogenation method, a hydroxylation method, an acid esterification method, a complex forming method, a neutralization method, and the like as described in a document, "Ionic liquids-Front line and future for developments-" [published by CMC Co., Ltd.] may be employed.

The halogenation method, hydroxylation method, complex forming method, and neutralization method will be described with reference to a synthesis method for a nitrogen-containing onium salt, and other ionic liquids such as a sulfur-containing onium salt and a phosphorus-containing onium salt can be also obtained by similar techniques.

The halogenation method is a method carried out by reaction as shown in the following formulas (1) to (3). First, a halide is obtained by reaction of a tertiary amine and a haloalkyl (reaction formula (1), a halogen to be used is chlorine, bromine, or iodine).

An aimed ionic liquid ($R_4NA$) is obtained by allowing the obtained halide to react with an acid (HA) having an anionic structure ($A^-$) of the aimed ionic liquid or a salt (MA, M is a cation forming a salt with the aimed anion, such as ammonium, lithium, sodium, or potassium).

[Formula 6]

(1) $R_3N + RX \rightarrow R_4NX$ (X: Cl, Br, I)

(2) $R_4NX + HA \rightarrow R_4NA + HX$

(3) $R_4NX + MA \rightarrow R_4NA + MX$ (M: $NH_4$, Li, Na, K, Ag or the like)

The hydroxylation method is a method carried out by reaction as shown in (4) to (8). First, a hydroxide ($R_4NOH$) is obtained by subjecting a halide ($R_4NX$) to an ion-exchange membrane electrolysis method (reaction formula (4)), an OH-type ion-exchange resin method (reaction formula (5)), or reaction with silver oxide ($Ag_2O$) (reaction formula (6)) (a halogen to be used is chlorine, bromine, or iodine).

An aimed ionic liquid ($R_4NA$) is obtained by subjecting the obtained hydroxide to reaction of reaction formulas (7) and (8) similarly to those in the halogenation method.

[Formula 7]

(4) $R_4NX + H_2O \rightarrow R_4NOH + 1/2H_2 + 1/2X_2$ (X: Cl, Br, I)

(5) $R_4NX + P\text{-}OH \rightarrow R_4NOH + P\text{-}X$ (P-OH: OH type ion exchange resin)

(6) $R_4NX + 1/2Ag_2O + 1/2H_2O \rightarrow R_4NOH + AgX$

(7) $R_4NOH + HA \rightarrow R_4NA + H_2O$

(8) $R_4NOH + MA \rightarrow R_4NA + MOH$ (M: $NH_4$, Li, Na, K, Ag or the like)

The acid esterification method is a method carried out by reaction as shown in (9) to (11). First, an acid ester is obtained by allowing a tertiary amine ($R_3N$) to react with an acid ester (reaction formula (9), an acid ester to be used is an ester of an inorganic acid such as sulfuric acid, sulfurous acid, phosphoric acid, phosphorous acid, or carbonic acid; or an ester of an organic acid such as methanesulfonic acid, methylphosphonic acid, or formic acid).

An aimed ionic liquid ($R_4NA$) is obtained by subjecting the obtained acid ester to reaction of reaction formulas (10) and (11) similarly to those in the halogenationmethod. Further, it is possible to directly obtain an ionic liquid by using methyl trifluoromethanesulfonate, methyl trifluoroacetate, or the like as the acid ester.

[Formula 8]

(9) $R_3N + ROY \rightarrow R_4NOY$

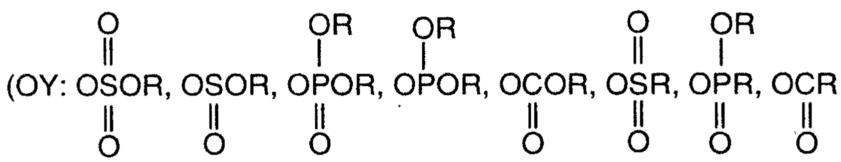

or the like)

(10) $R_4NOY + HA \rightarrow R_4NA + HOY$

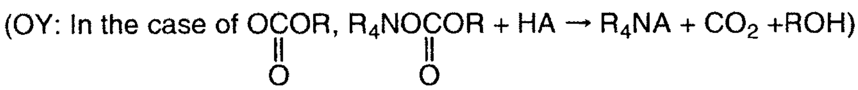

(11) $R_4NOY + MA \rightarrow R_4NA + MOY$ (M: $NH_4$, Li, Na, K, Ag or the like)

The complex forming method is a method carried out by reaction as shown in (12) to (15). First, a quaternary ammonium fluoride salt is obtained by allowing a quaternary ammonium halide ($R_4NX$), a quaternary ammonium hydroxide ($R_4NOH$), or a quaternary ammonium carbonic acid ester ($R_4NOCO_2CH_3$) to react withhydrofluoricacid (HF) orammoniumfluoride ($NH_4F$) (reaction formulas (12) to (14)).

An ionic liquid can be obtained by subjecting the obtained quaternary ammonium fluoride salt to complex forming reaction with a fluoride such as $BF_3$, $AlF_3$, $PF_5$, $ASF_5$, $SbF_5$, $NbF_5$, or $TaF_5$, (reaction formula (15)).

[Formula 9]

(12) $R_4NX + HF \rightarrow R_4NF + HX$ (X: Cl, Br, I)

(13) $R_4NY + HF \rightarrow R_4NF + HY$ (Y: OH, $OCO_2CH_3$)

(14) $R_4NY + NH_4F \rightarrow R_4NF + NH_3 + HY$ (Y: OH, $OCO_2CH_3$)

(15) $R_4NF + MF_{n-1} \rightarrow R_4NMF_n$

($MF_{n-1}$: $BF_3$, $AlF_3$, $PF_5$, $ASF_5$, $SbF_5$, $NbF_5$, $TaF_5$ or the like)

The neutralization method is a method carried out by reaction as shown in (16). A tertiary amine can be allowed to react with an organic acid such as $HBF_4$, $HPF_6$, $CH_3COOH$, $CF_3COOH$, $CF_3SO_3H$, $(CF_3SO_2)_2NH$, $(CF_3SO_2)_3CH$, or $(C_2F_5SO_2)_2NH$ to give an ionic liquid.

[Formula 10]

(16) $R_3N + HZ \rightarrow R_3HN^+Z^-$

[HZ: Organic acid such as $HBF_4$, $HPF_6$, $CH_3COOH$, $CF_3COOH$, $CF_3SO_3$, $(CF_3SO_2)_2NH$, $(CF_3SO_2)_3CH$, or $(C_2F_5SO_2)_2NH$]

R described in the formulas (1) to (16) represents hydrogen or a hydrocarbon group with 1 to 20 carbon atoms or is optionally a functional group a functional group formed by partially substituting the hydrocarbon group with a heteroatom.

[Alkali metal salt]

Due to high ionic dissociation, the alkali metal salts are preferable in terms of exhibition of excellent antistatic capability even with a very small amount of addition. Examples of the alkali metal salts preferably used include metal salts composed of cations such as $Li^+$, $Na^+$, and $K^+$ and anions such as $Cl^-$, $Br^-$, $I^-$, $AlCl_4^-$, $Al_2Cl_7^-$, $BF_4^-$, $PF_6^-$, $SCN^-$, $ClO_4^-$, $NO_3^-$, $CH_3COO^-$, $C_9H_{19}COO^-$, $CF_3COO^-$, $C_3F_7COO^-$, $CH_3SO_3^-$, $CF_3SO_3^-$, $C_4F_9SO_3^-$, $C_2H_5OSO_3^-$, $C_6H_{13}OSO_3^-$, $C_8H_{17}OSO_3^-$, $(CF_3SO_2)_2N^-$, $(C_2F_5SO_2)_2N^-$, $(C_3F_7SO_2)_2N^-$, $(C_4F_9SO_2)_2N^-$, $(CF_3SO_2)_3C^-$, $AsF_6^-$, $SbF_6^-$, $NbF_6^-$, $TaF_6^-$, $F(HF)_n^-$, $(CN)_2N^-$, $(CF_3SO_2)$ $(CF_3CO)N^-$, $(CH_3)_2PO_4^-$, $(C_2H_5)_2PO_4^-$, $CH_3(OC_2H_4)_2OSO_3^-$, $C_6H_4(CH_3)SO_3^-$, $(C_2F_5)_3PF_3^-$, $CH_3CH(OH)COO^-$, and $(FSO_2)_2N^-$. More preferably used are lithium salts such as LiBr, LiI, $LiBF_4$, $LiPF_6$, LiSCN, $LiClO_4$, $LiCF_3SO_3$, $Li(CF_3SO_2)_2N$, $Li(C_2F_5SO_2)_2N$, $Li(FSO_2)_2N$, $Li(CF_3SO_2)_3C$, and further preferably used are $LiCF_3SO_3$, $Li(CF_3SO_2)_2N$, $Li(C_2F_5SO_2)_2N$, Li $(C_3F_7SO_2)_2N$, $Li(C_4F_9SO_2)_2N$, $Li(FSO_2)_2N$, and $Li(CF_3SO_2)_3C$. These alkali metal salts may be used alone or in combination of two or more thereof.

Regarding the alkali metal salt, above all, many imide-containing anionic components provide hydrophobicity, cause no dissociation even if added to an aqueous pressure-sensitive adhesive, cause no generation of agglomerates, and the like and therefore, they are particularly preferably used. A sulfonyl-containing anionic component is excellent in stability in water, electric conductivity, heat stability, and the like and therefore, it is preferably used. Further, a fluoroalkyl-containing anionic component containing a fluorine atom provides an ionic compound with a low melting point and therefore, it is preferably used.

The blend amount of the ionic compound cannot be defined indiscriminately since it changes depending on the compatibility of the ionic compound and a polymer to be used; however, for example, it is preferably 0.1 to 3.0 parts

by weight, more preferably 0.2 to 2.5 parts by weight, and furthermore preferably 0.3 to 2.0 parts by weight or lower per 100 parts by weight (solid matter) of the base polymer (acrylic emulsion-based polymer). If it is lower than 0.1 parts by weight, no antistatic property is obtained and if it exceeds 3.0 parts by weight, staining to an adherend may possibly be increased.

[Re-peelable water dispersion type acryl-based pressure-sensitive adhesive composition]

As described above, the re-peelable water dispersion type acryl-based pressure-sensitive adhesive composition of the prevent invention contains the acrylic emulsion-based polymer, the crosslinking agent, and the ionic compound as indispensable components and, if necessary, may further contain various kinds of other additives.

[Ether-containing polysiloxane]

The re-peelable water dispersion type acryl-based pressure-sensitive adhesive composition may further contain an ether-containing polysiloxane (alkylene oxide-containing polysiloxane). Addition of the ether-containing polysiloxane (alkylene oxide-containing polysiloxane) can exhibit a more excellent antistatic property. The mechanism for exhibiting the antistatic property is not made clear in detail; however, an ether group has high affinity with water in the air and therefore, the electric charge is easily transferred to the air and further, an ether group is highly flexible in the molecular motion, and the electric charge generated at the time of peeling off can be efficiently transferred to the air and therefore, it is supposed that the excellent antistatic property is exhibited. In addition, since a silicone (polysiloxane) skeleton has a high interfacial adsorption property even for a small amount owing to the low surface tension, a trace amount can be transferred evenly to the surface of an adherend (an object to be protected) at the time when the pressure-sensitive adhesive sheet is peeled off from the adherend and the electric charge generated at the surface of the adherend can be efficiently transferred to the air and therefore, the excellent antistatic property can be exhibited.

The ether-containing polysiloxane (alkylene oxide-containing polysiloxane) is preferably composed of (contains) an ethylene oxide (EO) group. It is also possible to contain a propylene oxide (PO) group as the alkylene oxide group other than the EO group and in this case, the content by mole of the PO is preferably 50% or lower per 100% by mole of the EO and the PO in total. If the polysiloxane is composed of the EO group (contains the EO group as a constituent component), a more excellent antistatic property for peeling off can be provided and therefore, it is a preferable aspect.

The ether-containing polysiloxane (simply may be referred to as polysiloxane) has an HLB (Hydrophile-Lipophile-Balance) value of preferably 4 to 12, more preferably 5 to 11, and particularly preferably 6 to 10. If the HLB value is within the above range, not only the antistatic property can be provided but also the staining property for an adherend is made better and therefore, it is a preferable aspect.

Examples of specifically commercialized products as the polysiloxane include KF-352A, KF-353, KF-615, KF-6012, KF-351A, KF-353, KF-945, KF-6011, KF-889, and KF-6004 (all manufactured by Shin-Etsu Chemical Co., Ltd.), FZ-2122, FZ-2164, FZ-7001, SH8400, SH8700, SF8410, SF8422 (all manufactured by Dow Corning Toray Co., Ltd.), TSF-4440, TSF-4445, TSF-4452, TSF-4460 (manufactured by Momentive Performance Materials Inc.), BYK-333, BYK-377, BYK-UV3500, andBYK-UV3570 (manufactured by BYK Japan K.K.), and the like. These compounds may be used alone or in combination of two or more thereof.

Among the polysiloxanes, particularly those represented by the following formula are preferable aspects since they easily exhibit an antistatic property in terms of trapping of the ionic compound in the side chain and adsorption in the interface.

[Formula 11]

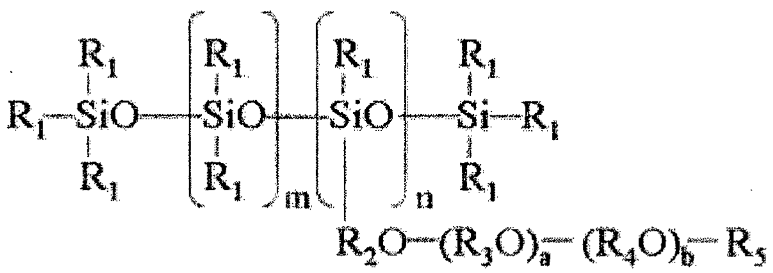

(wherein, $R_1$ represents a monovalent organic group; $R_2$, $R_3$, and $R_4$ represents an alkylene group; $R_5$ represents a hydroxyl or organic group; m and n represent an integer of 0 to 1000; provided that m and n do not simultaneously represent 0; a and b represent an integer of 0 to 100; provided that a and b do not simultaneously represent 0).

It is more preferable that in the polysiloxane, the terminal of the polyoxyalkylene (polyether) side chain is a hydroxyl group. Use of the polysiloxane can exhibit the antistatic property for an adherend (an object to be protected) and is therefore effective.
Regarding the above polysiloxane, specifically, $R_1$ in the formula may be a monovalent organic group, e.g., an alkyl group such as a methyl group, an ethyl group, or a propyl group; an aryl group such as a phenyl group or a tolyl group; or an aralkyl group such as a benzyl group or a phenethyl group, and may have a substituent group such as a hydroxyl group. Each of $R_2$, $R_3$, and $R_4$ may be an alkylene group with 1 to 8 carbon atoms such as a methylene group, an ethylene group, or a propylene group. Herein, $R_3$ and $R_4$ independently represent a different alkylene group and $R_2$ may be the same as or different from $R_3$ or $R_4$. One of $R_3$ and $R_4$ is preferably an ethylene or propylene group in order to increase the concentration of an antistatic agent soluble in its polyoxyalkylene (polyether) side chain. $R_5$ may be a monovalent organic group, e.g., an alkyl group such as a methyl group, an ethyl group, or a propyl group; or an acyl group such as an acetyl group and a propionyl group, and may have a substituent group such as a hydroxyl group. These compounds may be used alone or in combination of two or more thereof. The polysiloxane may also have a reactive substituent group such as a (meth)acryloyl group, an allyl group, or a hydroxyl group in the molecule. Among the polysiloxanes having a polyoxyalkylene (polyether) side chain, the polysiloxanes havingapolyoxyalkylene (polyether) sidechainhavingahydroxyl terminal are preferable since they are supposed to make it easy to give good balance of compatibility.
The blend amount of the polysiloxane is preferably 0.2 to 1 part by weight, more preferably 0.25 to 0.8 parts by weight, and furthermore preferably 0.3 to 0.6 parts by weight per 100 parts by weight of the acrylic emulsion-based polymer (solid matter). If it is lower than 0.2 parts by weight, it is hard to obtain the antistatic property and if it exceeds 1 part by weight, staining of an adherend may possibly be increased.
The pressure-sensitive adhesive composition of the present invention preferably does not contain substantially a so-called nonreactive (nonpolymerizable) component (excluding component such as water which is volatilized by drying and does not remain in pressure-sensitive adhesive layer) other than a reactive (polymerizable) component incorporated into the polymer forming the pressure-sensitive adhesive layer by reaction (polymerization) with the raw material monomers or the like of the acrylic emulsion-based polymer. If a nonreactive component remains in the pressure-sensitive adhesive layer, this component is transferred to an adherend and may cause whitening staining. Herein, "does not contain substantially" refers to the case of no positive addition except inevitable contamination, and specifically, the content of the nonreactive component in the pressure-sensitive adhesive composition (non-volatile components) is preferably lower than 1% by weight, more preferably lower than 0.1% by weight, and furthermore preferably lower than 0.005% by weight.
Examples of the nonreactive component include components such as a phosphoric acid ester-based compound used in JP-A 2006-045412, which bleed in the pressure-sensitive adhesive layer surface to provide peeling properties; and the like, and also include nonreactive emulsifiers such as sodium laurylsulfate and ammonium lauryl sulfate.
The pressure-sensitive adhesive composition of the present invention may contain various kinds of additives other than those described above to the extent that the additives do not cause an effect on the staining properties. Examples of the various kinds of additives include a pigment, a filler, a leveling agent, a dispersant, aplasticizer, a stabilizer, an antioxidant, an ultraviolet absorber, an ultraviolet stabilizer, a defoaming agent, an aging prevention agent, a preserver, and the like.
The pressure-sensitive adhesive composition of the present invention can be produced by blending the acrylic emulsion-based polymer, the water-insoluble crosslinking agent, and the ionic compound. If necessary, various kinds of other additives may be mixed. The mixing method to be employed may be a conventionally-known emulsion mixing method, and for example, without any particular limitation, stirring using a stirrer is preferable. The stirring condition is not particularly limited; however, for example, the stirring temperature is preferably 10 to 50°C and more preferably 20 to 35°C. The stirring time is preferably 5 to 30 minutes and more preferably 10 to 20 minutes. The stirring rotation rate is preferably 10 to 3000 rpm and more preferably 30 to 1000 rpm.

[Pressure-sensitive adhesive layer and pressure-sensitive adhesive sheet]

The pressure-sensitive adhesive layer (pressure-sensitive adhesive sheet) of the present invention is formed of the re-peelable water dispersion type acryl-based pressure-sensitive adhesive composition. A method of forming the pressure-sensitive adhesive layer is not particularly limited and a conventionally-known method of forming a pressure-sensitive adhesive layer can be employed. The pressure-sensitive adhesive layer can be formed by applying the pressure-sensitive adhesive composition onto a substrate or a peeling film (peeling liner) and thereafter drying the pressure-sensitive adhesive composition. If the pressure-sensitive adhesive layer is formed on a peeling (release) film, the pressure-sensitive adhesive layer is stuck to a substrate and then transferred.
The solvent-insoluble matter (gel ratio) of the pressure-sensitive adhesive layer (after crosslinked) in the pressure-sensitive adhesive sheet of the present invention is preferably 90 (% by weight) or more, and more preferably 95%

by weight or more. If the solvent-insoluble matter is less than 90% by weight, pollutant transfer to an adherend may be increased so that whitening staining is caused, and the re-peeling properties may become insufficient (heavy peeling properties). The solvent-insoluble matter of the pressure-sensitive adhesive layer (after crosslinked) can be measured in the same manner as in the above-mentioned measurement method for the solvent-insolublematter of the acrylic emulsion-based polymer. Specifically, the measurement can be carried out, in the above "measurement method for solvent-insoluble matter", by interpreting "acrylic emulsion-based polymer" as "pressure-sensitive adhesive layer (after crosslinked)".

In the case of forming the pressure-sensitive adhesive layer (pressure-sensitive adhesive sheet), the temperature at the time of drying is usually about 80 to 170°C and preferably 80 to 160°C, and the drying time is about 0.5 to 30 minutes and preferably 1 to 10 minutes. Further, aging is carried out at room temperature to about 50°C for 1 day to 1 weak to produce the pressure-sensitive adhesive layer (pressure-sensitive adhesive sheet).

Various kinds of methods are employed for the step of applying the pressure-sensitive adhesive composition. Specific examples of the methods include roll coating, kiss roll coating, gravure coating, reverse coating, roll brush, spray coating, dip roll coating, bar coating, knife coating, air knife coating, curtain coating, lip coating, extrusion coating by a die coater, and the like.

The application amount thereof is controlled such that a pressure-sensitive adhesive layer to be formedhas a prescribed thickness (thickness after drying) in the application step. The thickness of the pressure-sensitive adhesive layer (thickness after drying) is usually set in a range of about 1 to 100 μm, preferably 5 to 50 μm, and more preferably 10 to 40 μm.

Examples of a material constituting the peeling film include plastic films such as films of polyethylene, polypropylene, polyethylene terephthalate, and polyester; porous materials such as paper, cloth, and nonwoven fabric; nets, foamed sheets, metal foils, and proper thin sheet bodies such as their laminates. In terms of excellent surface smoothness, plastic films are used preferably.

The plastic films are not particularly limited as long as they are films capable of protecting the pressure-sensitive adhesivelayer, and examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, an ethylene-vinyl acetate copolymer film, and the like.

The thickness of the peeling film is usually 5 to 200 μm and preferably about 5 to 100 μm.

If necessary, the peeling film may be subjected to release and stain-resistant treatment by a silicone-based, fluorine-based, long chain alkyl-based, or fatty acid amide-based release agent, a silica powder and the like, and to antistatic treatment by application type, kneading type, and vapor deposition type treatment. Particularly, the peeling properties from the pressure-sensitive adhesive layer can be more improved by properly carrying out peeling (release) treatment suchas silicone treatment, longchainalkyl treatment, and fluorine treatment for the surface of the peeling film.

In the case where the pressure-sensitive adhesive layer is exposed, the pressure-sensitive adhesive layer may be protected with a peeling film until it is practically used. The peeling film may be used as it is as a separator for a pressure-sensitive adhesive type optical film, and simplification in the steps can be achieved.

Formation of the pressure-sensitive adhesive layer (pressure-sensitive adhesive layer formed of the pressure-sensitive adhesive composition of the present invention) on at least one surface of a substrate (referred to as "support" or "supporting substrate") can give a pressure-sensitive adhesive sheet (pressure-sensitive adhesive sheet stuck to a substrate; pressure-sensitive adhesive sheet having the pressure-sensitive adhesive layer on at least one surface side of a substrate). The pressure-sensitive adhesive layer can be used as it is as a pressure-sensitive adhesive sheet without a substrate. Hereinafter, the pressure-sensitive adhesive sheet stuck to a substrate may be referred to as "pressure-sensitive adhesive sheet of the present invention".

The pressure-sensitive adhesive sheet (the pressure-sensitive adhesive sheet stuck to a substrate) of the present invention is obtained by, for example, applying the pressure-sensitive adhesive composition of the present invention onto at least one surface side of a substrate, and if necessary, drying the pressure-sensitive adhesive composition to form a pressure-sensitive adhesive layer on at least one surface side of the substrate (direct printingmethod) . Crosslinking may be carried out by dehydration in the drying step, heating the pressure-sensitive adhesive sheet after drying, or the like. The pressure-sensitive adhesive sheet can be also obtained by forming a pressure-sensitive adhesive layer on a peeling film once and transferring the pressure-sensitive adhesive layer onto the substrate (transfer method). Although the method is not particularly limited, the pressure-sensitive adhesive layer is preferably formed by so-called direct printing method of directly applying the pressure-sensitive adhesive composition onto the substrate surface.

The substrate for the pressure-sensitive adhesive sheet of the present invention is preferably a plastic substrate (e.g., a plastic film or a plastic sheet) from the viewpoint of obtaining a pressure-sensitive adhesive sheet with high transparency. Examples of a material for the plastic substrate include, but are not particularly limited to, transparent resins, e.g., polyolefins (polyolefin-based resins) such as polypropylene and polyethylene; polyesters (polyester-based resins) such as polyethylene terephthalate (PET); polycarbonates, polyamides, polyimides, acryl, polystyrenes, acetates, polyethersulfones, triacetyl cellulose, and the like. These resins may be used alone or in combination of two or more

thereof. Among these substrates, although not particularly limited to, polyester-based resins and polyolefin-based resins are preferably used and PET, polypropylene, and polyethylene are more preferably used in terms of productivity and formability. That is, as the substrate, polyester-based films and polyolefin-based films are preferable and a PET film, a polypropylene film, and a polyethylene film are more preferable. Examples of the polypropylene include, but are not particularly limited to, a homo-type, which is a homopolymer; a random type, which is an $\alpha$-olefin random copolymer; and a block type, which is an $\alpha$-olefin block copolymer. Examples of the polyethylene include low density polyethylene (LDPE), high density polyethylene (HDPE), and linear low density polyethylene (L-LDPE). These plastics may be used alone or in combination of two or more thereof.

The thickness of the substrate is not particularly limited, but is preferably 10 to 150 $\mu$m and more preferably 30 to 100 $\mu$m.

For the purpose of improving the adhesive strength to the pressure-sensitive adhesive layer, the surface of the substrate on the side where the pressure-sensitive adhesive layer is to be formed is preferably subjected to easy adhesion treatment such as acid treatment, alkali treatment, primer treatment, corona treatment, plasma treatment, or ultraviolet treatment. An intermediate layer may be formed between the substrate and the pressure-sensitive adhesive layer. The thickness of the intermediate layer is preferably, for example, 0.05 to 1 $\mu$m and more preferably 0.1 to 1 $\mu$m.

The pressure-sensitive adhesive sheet of the present invention may be formed into a rolled body, and may be wound into a roll in the state where the pressure-sensitive adhesive layer is protected by a peeling film (separator). Further, the rear surface of the pressure-sensitive adhesive sheet (surface on the side opposite to the side where the pressure-sensitive adhesive layer is formed) may be subjected to release treatment and/or stain-resistant treatment with a silicone-based, fluorine-based, long chain alkyl-based or fatty acid amide-based release agent, a silica powder or the like to form a rear surface treatment layer (release treatment layer, stain-resistant treatment layer, etc.). The pressure-sensitive adhesive sheet of the present invention is especially preferable to have a configuration of pressure-sensitive adhesive layer/substrate/rear surface treatment layer.

The pressure-sensitive adhesive sheet of the present invention is more preferably subj ected to antistatic treatment. The antistatic treatment may be a common antistatic treatment method, and examples thereof include, but are not particularly limited to, a method for forming an antistatic layer on the substrate rear surface (surface on the side opposite to the side where the pressure-sensitive adhesive layer is formed) and a method for kneading a kneading type antistatic agent in the substrate.

Examples of a method for forming an antistatic layer include a method of applying an antistatic agent, or an antistatic resin containing an antistatic agent and a resin component, or a conductive resin composition or conductive polymer containing a conductive substance and a resin component; a method for depositing a conductive substance or plating with a conductive substance; and the like.

Examples of the antistatic agent include cationic antistatic agents having a cationic functional group such as a quaternary ammonium salt and a pyridinium salt (e.g., primary amino group, secondary amino group, and tertiary amino group) ; anionic antistatic agents having an anionic functional group such as a sulfonic acid salt, a sulfuric acid ester salt, a phosphonic acid salt, and a phosphoric acid ester salt; amphoteric ionic antistatic agent such as alkylbetain and its derivatives, imidazoline and its derivatives, and alanine and its derivatives; nonionic antistatic agents such as aminoalcohol and its derivatives, glycerin and its derivatives, and polyethylene glycol and its derivatives; and further ion conductive polymers obtained by polymerization or copolymerization of monomers having ion conductive groups shown in the cationic antistatic agents, anionic antistatic agents, and amphoteric antistatic agents.

Specifically, examples of the cationic antistatic agents include (meth)acrylate copolymers having a quaternary ammonium group such as an alkyltrimethylammonium salt, acyloyl amidopropyl trimethylammonium methosulfate, an alkylbenzylmethylammonium salt, acyl choline chloride, and polydimethylaminoethyl methacrylate; styrene-based copolymers having a quaternary ammonium group such as polyvinylbenzyltrimethylammonium chloride; diallylamine copolymers having a quaternary ammonium group such as polydiallyldimethylammonium chloride; and the like. Examples of the anionic antistatic agents include an alkylsulfonic acid salt, an alkylbenzenesulfonic acid salt, an alkylsulfuric acid ester salt, an alkylethoxysulfuric acid ester salt, an alkylphosphoric acid ester salt, a sulfonic acid-containing styrene-based copolymer, and the like. Examples of the amphoteric ionic antistatic agents include an alkylbetain, an alkylimidazolium betain, a carbobetain graft copolymer, and the like. Examples of the nonionic antistatic agents include fatty acid alkylolamide, di-(2-hydroxyethyl)alkylamine, polyoxyethylene alkylamine, a fatty acid glycerin ester, a polyoxyethylene glycol fatty acid ester, a sorbitan fatty acid ester, a polyoxysorbitan fatty acid ester, polyoxyethylene alkylphenyl ether, polyoxyethylene alkyl ether, polyethylene glycol, polyoxyethylene diamine, a copolymer composed of a polyether and a polyester, methoxypolyethylene glycol (meth)acrylate, and the like.

Examples of the conductive polymer include polyaniline, polypyrrole, polythiophene, and the like.

Examples of the conductive substance include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, and alloys and mixtures thereof, and the like.

Examples of the resin component include popular resins such as polyester, acrylic, polyvinyl, urethane, melamine, and epoxy resins. In the case where the antistatic agent is a polymer type antistatic agent, the antistatic resin may not contain the above-mentioned resin component. The antistatic resin may also contain, as a crosslinking agent, a methylolated or alkylolated melamine-based, urea-based, glyoxal-based, and acrylamide-based compound, an epoxy-based compound, and an isocyanate-based compound.

An example of the method for forming the antistatic layer by application includes a method for diluting the above antistatic resin, conductive polymer, and conductive resin composition with a medium or dispersant such as an organic solvent or water and applying the obtained coating solution to a substrate, followed by drying. Examples of the organic solvent include methyl ethyl ketone, acetone, ethyl acetate, tetrahydrofuran, dioxane, cyclohexanone, n-hexane, toluene, xylene, methanol, ethanol, n-propanol, isopropanol, and the like. These solvents may be used alone or in combination of two or more thereof. As the application method, conventionally known application methods are employed and specific examples thereof include roll coating, gravure coating, reverse coating, roll brush, spray coating, air knife coating, immersion and curtain coating methods.

The thickness of the antistatic layer (antistatic resin layer, conductive polymer layer, and conductive resin composition layer) formed by application is preferably 0.001 to 5 μm and more preferably 0.005 to 1 μm.

Examples of a method for vapor depositing the conductive substance or plating with the conductive substance include vacuum vapor deposition, sputtering, ion plating, chemical vapor deposition, spray heat decomposition, chemical plating, electroplating methods, and the like.

The thickness of the antistatic layer (conductive substance layer) formed by the vapor deposition or plating is preferably 20 to 10000 angstroms (0.002 to 1 μm) and more preferably 50 to 5000 angstroms (0.005 to 0.5 μm).

As the kneading type antistatic agent, the antistatic agents may be used properly. The blend amount of the kneading type antistatic agent is preferably 20% by weight or lower, and more preferably 0.05 to 10% by weight per total weight (100% by weight) of the substrate. A kneading method is not particularly limited as long as the method can evenly mix the kneading type antistatic agent with a resin to be used for, for example, a plastic substrate and generally, examples thereof include methods using a heating roll, a Banbury mixer, a pressure kneader, a biaxial kneader, and the like.

The re-peelable water dispersion type acryl-based pressure-sensitive adhesive composition of the present invention is a pressure-sensitive adhesive composition excellent in antistatic properties, adherability, and re-peelable properties (easy peelable properties) and capable of forming a re-peelable pressure-sensitive adhesive layer, and the composition is usedforforming a pressure-sensitive adhesive layer (re-peelable) used for re-peeling. That is, the pressure-sensitive adhesive sheet having the pressure-sensitive adhesive layer are preferably used for re-peeling [e.g., masking tapes such as a masking tape for construction aging, a masking tape for automotive coating, a masking tape for electronic parts (lead frame, printed board, etc.), and a masking tape for sand blast; surface protecting films such as a surface protecting film for aluminum sashes, a surface protecting film for optical plastics, a surface protecting film for optical glass, a surface protecting film for automotive protection, and a surface protecting film for metal plates; pressure-sensitive adhesive tapes for semiconductor/electronic part production processes such as a background tape, a tape for pellicle fixation, a tape for dicing, a tape for lead frame fixation, a cleaning tape, a dust removal tape, a carrier tape, and a cover tape; wrapping tapes for electronic appliances and electronic parts; temporary fixation tapes for transportation, bundling tapes; and labels], and the like.

The pressure-sensitive adhesive sheet of the present invention is alsopreferablyused for surface protection (surface protecting films for optical members, etc.) of optical members (optical plastics, optical glass, optical films, etc.) such as polarizing plates, retardation plates, anti-reflection plates, wave plates, optical compensation films, and brightness improvement films constituting panels such as liquid crystal displays, organic electroluminescence (organic EL), and field emission displays. However, use of the pressure-sensitive adhesive sheet is not limited thereto and the sheet may be used for surface protection and breakage prevention at the time of producing finely processed parts such as semiconductors, circuits, various kinds of printed circuit boards, various kinds of masks, and lead frames, or for removing foreign matters, etc., or masking, or the like.

It is preferable that the pressure-sensitive adhesive sheet of the present invention is a surface protecting film for an optical member.

An optical member according to the present invention is preferably an optical member obtained by stacking the pressure-sensitive adhesive sheet.

## Examples

Hereinafter, the present invention will be described in detail based on Examples; however, the invention should not be limited to these Examples. In the following description, "part(s)" and "%" are on the basis of weight unless otherwise specified.

<Example 1>

(Preparation of monomer emulsion: loading EM)

A container was loaded with 90 parts by weight of water and, as shown in Table 1, 92 parts by weight of 2-ethylhexyl acrylate (2EHA), 4 parts by weight of acrylic acid (AA), 4 parts by weight of methyl methacrylate (MMA), and 2 parts by weight of a reactive nonionic anionic emulsifier (trade name; "Aqualon HS-1025", manufactured by DAI-ICHI KOGYO SEIYAKU CO., LTD.), and thereafter the components were stirred and mixed by a homomixer to obtain a monomer emulsion.

(Preparation of acrylic emulsion-based polymer: initial loading)

A reaction container equipped with a condenser, a nitrogen gas introduction tube, a thermometer, and a stirrer was then added with 50 parts by weight of water and 0. 07 parts by weight of a polymerization initiator (ammonium persulfate), and heated to 75°C, and thereafter the above monomer emulsion was added over 3 hours under stirring conditions and further reaction was carried out at 75°C for 3 hours. Next, the reaction system was cooled to 30°C and added with ammonia water with 10% by weight concentration to adjust pH to 8 to prepare a water dispersion of an acrylic emulsion-based polymer (concentration of acrylic emulsion-based polymer: 40% by weight, average particle diameter: 531 nm).

(Preparation of re-peelable water dispersion type acryl-based pressure-sensitive adhesive composition)

The water dispersion of the acrylic emulsion-basedpolymer was mixed with 1. 8 parts by weight of an epoxy-based crosslinking agent, which is awater-insoluble crosslinking agent [tradename: "TETRAD-C"; manufactured by MITSUBISHI GAS CHEMICAL COMPANY, INC., 1,3-bis(N,N-diglycidylaminomethyl)cyclohexane; epoxy equivalent: 110; and number of functional groups: 4], 1 part by weight of an ionic liquid, which is an antistatic agent [trade name "Elexcel AS-110, manufactured by DAI-ICHI KOGYO SEIYAKU CO., LTD., 1-ethyl-3-methylimidazolium bisfluorosulfonylimide; efficacious component 100% by weight), and 0.32 parts by weight of an ether-containing polysiloxane [trade name "KF-353", manufactured by Shin-Etsu Chemical Co., Ltd. ; efficacious component 100% by weight), while stirring with a stirrer under stirring conditions of 23°C and 300 rpm for 10 minutes, to prepare a re-peelable water dispersion type acryl-based pressure-sensitive adhesive composition.

(Formation of pressure-sensitive adhesive layer and production of pressure-sensitive adhesive sheet)

The re-peelable water dispersion type acryl-based pressure-sensitive adhesive composition was applied (coated) onto a surface of a PET film (trade name: "T100M38", manufactured by Mitsubishi Plastics Inc.; thickness: 38 μm), which was subjected to corona treatment, using an applicator manufactured by TESTER SANGYO CO., LTD. so as to have a thickness of 15 μm after drying, and then dried at 120°C for 2 minutes in a hot air circulation type oven and successively aged at room temperature for 1 week to obtain a pressure-sensitive adhesive sheet.

<Examples 2 to 8 and Comparative Examples 1 and 3>

As shown in Tables 1 and 2, re-peelable water dispersion type acryl-based pressure-sensitive adhesive compositions were prepared in the same manner as in Example 1 by changing the blend contents, the blend amounts and the like. Additives not described in the Table were added in the same amounts as those in Example 1. Pressure-sensitive adhesive sheets were produced in the same manner as in Example 1 using the re-peelable water dispersion type acryl-based pressure-sensitive adhesive compositions.

<Comparative Example 2>

A container was loaded with 90 parts by weight of water and, as shown in Table 1, 92 parts by weight of 2-ethylhexyl acrylate (2EHA), 4 parts by weight of acrylic acid (AA), 4 parts by weight of methyl methacrylate (MMA), and 2 parts by weight of a reactive nonionic anionic emulsifier (trade name; "Aqualon HS-1025", manufactured by DAI-ICHI KOGYO SEIYAKU CO., LTD.), and thereafter the components were stirred and mixed by a homomixer to prepare a monomer emulsion.

A reaction container equipped with a condenser, a nitrogen gas introduction tube, a thermometer, and a stirrer was then added with 50 parts by weight of water, 0.01 parts by weight of a polymerization initiator (ammonium persulfate), and the monomer emulsion in an amount equivalent to 10% by weight and, under stirring conditions, emulsion polymerization was performed at 65°C for 1 hour. Thereafter, 0.05 parts by weight of the polymerization initiator (ammonium persulfate) was further added and successively, under stirring conditions, the remaining of the monomer emulsion (amount equivalent to 90% by weight) was added over 3 hours and then allowed to react at 75°C for 3 hours. Next, the reaction product was cooled to 30°C and added with ammonia water with 10% by weight concentration to adjust pH to 8 to obtain a water dispersion of an acrylic emulsion-based polymer (concentration of acrylic emulsion-based polymer: 42% by weight).

<Example 9>

A monomer emulsion was prepared in the same manner as in Example 4 except that the rawmaterial monomers, the blend amounts and the like were changed as shown in Table 1, and the amount of the polymerization initiator was changed to 0.15 pats by weight. Additives not described in the Tablewere added in the same amounts as those in Example 1. A water dispersion type acryl-based pressure-sensitive adhesive composition (pressure-sensitive adhesive composition) and a pressure-sensitive adhesive sheet were obtained in the same manner as in Example 1 using the monomer emulsion.

<Example 10>

(Preparation of monomer emulsion: loading EM)

A container was loaded with 90 parts by weight of water and, as shown in Table 1, 92 parts by weight of 2-ethylhexyl acrylate (2EHA), 4 parts by weight of acrylic acid (AA), 4 parts by weight of methyl methacrylate (MMA), 2 parts by weight of a reactive nonionic anionic emulsifier (trade name; "Aqualon HS-1025", manufactured by DAI-ICHI KOGYO SEIYAKU CO., LTD.), and 0.05 parts by weight of a chain transfer agent (n-lauryl mercaptan) and thereafter the components were stirred and mixed by a homomixer to prepare a monomer emulsion.

(Preparation of acrylic emulsion-based polymer: initial loading)

A reaction container equipped with a condenser, a nitrogen gas introduction tube, a thermometer, and a stirrer was then added with 50 parts by weight of water and 0.7 parts by weight of a polymerization initiator (ammonium persulfate), and heated to 75°C, and thereafter the above monomer emulsion was added over 3 hours under stirring conditions and further reaction was carried out at 75°C for 3 hours. Next, the reaction system was cooled to 30°C and added with ammonia water with 10% by weight concentration to adjust pH to 8 to prepare a water dispersion of an acrylic emulsion-based polymer (concentration of acrylic emulsion-based polymer: 42% by weight, average particle diameter: 300 nm).

A water dispersion type acryl-based pressure-sensitive adhesive composition(pressure-sensitive adhesive composition) and a pressure-sensitive adhesive sheet were produced in the same manner as in Example 1 by changing the blend amounts and the like as for the other respects as shown in Table 1. Additives not described in the Table were added in the same amounts as those in Example 1.

[Evaluation]

Each water dispersion type acryl-based pressure-sensitive adhesive composition and each pressure-sensitive adhesive sheet obtained in the Examples and the Comparative Examples were evaluated by the following measurement methods. Regarding the evaluation results, the average particle diameter of each acrylic emulsion-based polymer was shown in Table 1 and the antistatic property for peeling off in low humidity was shown in Table 3.

<Measurement of average particle diameter of acrylic emulsion-based polymer>

A laser diffraction/scattering grain size distribution measuring apparatus LS1332 manufactured by BECKMAN COULTER was used for measuring the average particle diameter of each emulsion. The measurement was carried out at a pump speed of 30% for a measurement time of 90 seconds. The measurement was carried out by setting each emulsion type pressure-sensitive adhesive diluted 10 times.

Generally, emulsion particles bear electric charge on the particle surface and therefore, an ionic compound tends to be trapped on the surface. As a result, the ionic compound to be transferred to an adherend is decreased at the time of peeling off the pressure-sensitive adhesive from the adherend and therefore, it is supposed that the antistatic property is hard to be exhibited at the time of peeling off. Herein, if the average particle diameter of the emulsion is made large, the surface area of the respective particles is increased; however, the number of particles contained in the same

solid matter concentration and in the same volume is lessened and therefore, the total surface area of the particles is decreased. As a result, it is supposed that the ionic compound trapped on the particle surface can be decreased to result in improvement of the antistatic property. In the present invention the particle diameter is 130 to 600 nm, preferably 200 to 550 nm, and more preferably 250 to 450 nm.

<Antistatic property for peeling off in low humidity>

Each produced pressure-sensitive adhesive sheet was cut into a size of 70 mm in width and 130 mm in length, and after the separator was peeled off, the pressure-sensitive adhesive sheet was pressure-bonded to the surface of a polarizing plate (trade name: "SEG 1425DU" (DU in Table 3, $R_a$=12) manufactured by NITTO DENKO CORPORATION, a highly polar and smooth adherend, and trade name: "SEG 1425 AGS2B ("S2B" in Table 3, $R_a$=356", a low polar and rough adherend) stuck to an acrylic plate (Acrylite, manufactured by MITSUBISHI RAYON CO., LTD., thickness: 1 mm; width: 70 mm; length: 100 mm), which was previously treated for static elimination, by a hand roller such that one rim part was extruded out by 30 mm. Successively, after allowed to stand in conditions of 20°C × 25 ± 2% RH for 1 day, the resulting sample was set at a prescribed position as shown in Fig. 1. The one rim part extruded by 30 mm was fixed in an automatic winder, and the pressure-sensitive adhesive sheet was peeled off at a peeling angle of 150° and a peeling speed of 30 m/minute (high speed peeling). The potential generated in the polarizingplate surface at that time was measured by a potentiometer (KSD-0103, manufactured by KASUGA ELECTRIC WORKS LTD.) fixed at a prescribed position. The distance between the sample and the potentiometer was 100 mm at the time of measuring the potential in the polarizing plate surface. The measurement was carried out in conditions of 20°C × 25 ± 2% RH. Herein, the "highly polar adherend" means an adherend having an adhesive surface such as triacetyl cellulose surface with 30 to 50° of an angle (water contact angle) formed between the adhesive surface and a tangent line of the end part of a droplet which is formed by dropping about 1. 9 μL of distilled water in an atmosphere of 23°C × 50%RH at a time of 1 second after the dropping of the droplet; and the low polar adherend means an adherend having an adhesive surface such as hard coat surface containing silica particles or a polymer with 55 to 80° of a water contact angle measured in the above-mentioned conditions.

The peeling electrification voltage in low humidity (absolute value) of the pressure-sensitive adhesive sheet of the present invention is preferably lower than 0.5 kV and more preferably 0.4 kV or lower. If the peeling electrification voltage 0.5 kV or higher, dust is easily adsorbed at the time of peeling off the pressure-sensitive adhesive sheet and the polarizer arrangement in the polarizing plate is disordered and therefore, it is not preferable.

[Table 1]

| Blend contents for acrylic emulsion-based polymer preparation (parts by weight: solid matter) | | | Example | | | | | | | | | | Comparative Example | |
|---|---|---|---|---|---|---|---|---|---|---|---|---|---|---|
| | | | 1 | 2 | 3 | 4 | 5 | 6 | 7 | 8 | 9 | 10 | 1 | 2 |
| Raw material monomer | 2EHA | | 92 | 92 | 92 | 92 | 92 | 92 | 92 | 92 | 92 | 92 | 92 | 96 |
| | AA | | 4 | 4 | 4 | 4 | 4 | 4 | 4 | 4 | 4 | 4 | 4 | 4 |
| | MMA | | 4 | 4 | 4 | 4 | 4 | 4 | 4 | 4 | 4 | 4 | 4 | |
| Monomer emulsion | Entire dropping | | ○ | ○ | ○ | ○ | ○ | ○ | ○ | ○ | ○ | ○ | ○ | |
| | Two-step dropping | | | | | | | | | | | | | ○ |
| Emulsifier | HS-1025 | EM loading | 2.00 | 2.00 | 2.00 | 2.00 | 2.00 | 2.00 | 2.00 | 2.00 | 2.00 | 2.00 | 2.00 | 1.35 |
| | | Initial loading | | 0.001 | 0.005 | 0.0075 | 0.010 | 0.050 | 0.100 | | | | 0.200 | 1.650 |
| Average particle diameter of acrylic emulsion-based polymer (nm) | | | 531 | 390 | 309 | 215 | 226 | 166 | 143 | 531 | 337 | 337 | 126 | 120 |

[Table 2]

| Blend contents for acryl-based pressure-sensitive adhesive composition preparation (parts by weight: solid matter) | | | Example | | | | | | | | | | Comparative Example | |
|---|---|---|---|---|---|---|---|---|---|---|---|---|---|---|
| | | | 1 | 2 | 3 | 4 | 5 | 6 | 7 | 8 | 9 | 10 | 1 | 2 |
| Acrylic pressure-sensitive adhesive composition | Acrylic emulsion-based polymer | | 100 | 100 | 100 | 100 | 100 | 100 | 100 | 100 | 100 | 100 | 100 | 100 |
| | Water-insoluble crosslinking agent | T/C | 1.8 | 1.8 | 1.8 | 1.8 | 1.8 | 1.8 | 1.8 | 1.8 | 1.8 | 1.8 | 1.8 | 1.8 |
| | Ionic liquid | AS-110 | 1 | 1 | 1 | 1 | 1 | 1 | 1 | | 1 | 1 | 1 | 1 |
| | Alkali metal salt | $LiCF_3SO_3$ | | | | | | | | 0.5 | | | | |
| | Polysiloxane | KF-353 | 0.32 | 0.32 | 0.32 | 0.32 | 0.32 | 0.32 | 0.32 | 0.32 | 0.32 | 0.32 | 0.32 | 0.32 |

[Table 3]

| Evaluation result of antistatic property for peeling off in low humidity (unit: kV, absolute value) | | Example | | | | | | | | | | Comparative Example | |
|---|---|---|---|---|---|---|---|---|---|---|---|---|---|
| | | 1 | 2 | 3 | 4 | 5 | 6 | 7 | 8 | 9 | 10 | 1 | 2 |
| Peeling speed 30 m/minute | Object: DU | 0 | 0 | 0 | 0 | 0 | 0.2 | 0.2 | 0 | 0 | 0 | 0.5 | 0.8 |
| Peeling speed 30 m/minute | Object: S2B | 0 | 0 | 0 | 0 | 0 | 0 | 0.1 | 0 | 0 | 0 | 0.3 | 0.5 |

The weight of solid matter was shown in the blend contents in Table 1. The abbreviations used in Table 1 are as follows:

2EHA: 2-ethylhexyl acrylate,
AA: acrylic acid,
MMA: methyl methacrylate,
HS-1025: trade name: "Aqualon HS-1025", manufactured by DAI-ICHI KOGYO SEIYAKU CO., LTD., (reactive nonionic anionic emulsifier),
T/C: trade name: "TETRAD-C", manufactured by MITSUBISHI GAS CHEMICAL COMPANY, INC., (1,3-bis(N,N-diglycidylaminomethyl)cyclohexane, epoxy equivalent: 110, number of functional groups:4) (water-insoluble crosslinking agent),
AS-110: trade name "Elexcel AS-110", manufactured by DAI-ICHI KOGYO SEIYAKU CO., LTD., 1-ethyl-3-methylimidazolium bisfluorosulfonylimide (ionic liquid),
$LiCF_3SO_3$: lithium trifluoromethanesulfonate, efficacious component 50% by weight (fluorine-containing alkali metal salt)
KF-353: trade name "KF-353", manufactured by Shin-Etsu Chemical Co., Ltd., (ether-containing polysiloxane, efficacious component 100% by weight)

According to the evaluation results shown in Table 3, it was confirmed that in all Examples, it was possible to obtain an pressure-sensitive adhesive layer (a pressure-sensitive adhesive sheet) which was excellent in the antistatic property for peeling off in low humidity and which was independent on the surface state of an adherend not only in the case where the adherend had a smooth surface but also in the case where the adherend had a rough surface.

On the other hand, in Comparative Example 1, since an acrylic emulsion-basedpolymer with an average particle diameter out of a desired range was used, the obtained pressure-sensitive adhesive sheet was inferior in the antistatic property for peeling off in low humidity in both cases of smooth and rough surfaces of the adherend when the pressure-sensitive adhesive sheet was stuck to the adherend and then peeled off: and in Comparative Example 2, since two-step (dropping) polymerization was carried out in the stage of preparing the monomer emulsion, no acrylic emulsion-based polymer with a desired average particle diameter was obtained and also in this case, the antistatic property for peeling off in low humidity was found to be inferior.

DESCRIPTION OF REFERENCE SIGNS

1: potentiometer
2: pressure-sensitive adhesive sheet
3: polarizing plate
4: acrylic plate
5: sample fixed stand

## Claims

1. A re-peelable water dispersion type acryl-based pressure-sensitive adhesive composition comprising an acrylic emulsion-based polymer composed of a (meth)acrylic acid alkyl ester in an amount of 70 to 99.5% by weight and

a carboxyl-containing unsaturated monomer in an amount of 0.5 to 10% by weight as raw material monomers, a crosslinking agent, and an ionic compound, wherein
the acrylic emulsion-based polymer has an average particle diameter of 130 to 600 nm, and
the ionic compound is an ionic liquid and/or an alkali metal salt.

2. The re-peelable water dispersion type acryl-based pressure-sensitive adhesive composition according to claim 1, wherein the ionic compound contains an imide-containing anion.

3. The re-peelable water dispersion type acryl-based pressure-sensitive adhesive composition according to claim 1 or 2, wherein the ionic compound contains a sulfonyl-containing anion.

4. The re-peelable water dispersion type acryl-based pressure-sensitive adhesive composition according to any one of claims 1 to 3, wherein the ionic compound contains a fluoroalkyl-containing anion.

5. The re-peelable water dispersion type acryl-based pressure-sensitive adhesive composition according to any one of claims 1 to 4, wherein the ionic compound is an ionic liquid and contains at least one kind cation selected from the group consisting of cations represented by the following formulas (A) to (E):

[Formula 1]

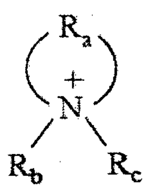
(A)

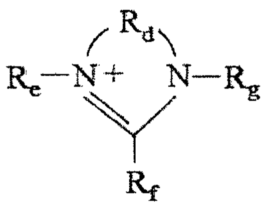
(B)

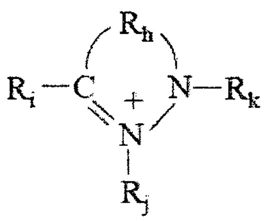
(C)

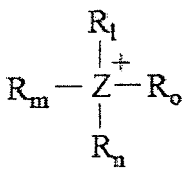
(D)

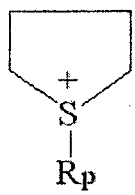
(E)

[in the formula (A), $R_a$ represents a hydrocarbon group with 4 to 20 carbon atoms or is optionally a functional group formed by partially substituting the hydrocarbon group with a heteroatom; and $R_b$ and $R_c$ are the same or different, and each represent hydrogen or a hydrocarbon group with 1 to 16 carbon atoms or are each optionally a functional group formed by partially substituting the hydrocarbon group with a heteroatom; provided that the nitrogen atom contains a double bond, there is no $R_c$] ;
[in the formula (B), $R_d$ represents a hydrocarbon group with 2 to 20 carbon atoms or is optionally a functional group formed by partially substituting the hydrocarbon group with a heteroatom; and $R_e$, $R_f$, and $R_g$ are the same or different, and each represent hydrogen or a hydrocarbon group with 1 to 16 carbon atoms or are each optionally a functional group formed by partially substituting the hydrocarbon group with a heteroatom] ;
[in the formula (C), $R_h$ represents a hydrocarbon group with 2 to 20 carbon atoms or is optionally a functional group formed by partially substituting the hydrocarbon group with a heteroatom; and $R_i$, $R_j$, and $R_k$ are the same or different, and each represent hydrogen or a hydrocarbon group with 1 to 16 carbon atoms or are each optionally a functional group formed by partially substituting the hydrocarbon group with a heteroatom];
[in the formula (D), Z represents a nitrogen, sulfur or phosphorus atom; $R_l$, $R_m$, $R_n$, and $R_o$ are the same or different, and each represent a hydrocarbon group with 1 to 20 carbon atoms or are each optionally a functional group formed by partially substituting the hydrocarbon group with a heteroatom; provided that z is a sulfur atom, there is no $R_o$]; and
[in the formula (E), $R_p$ represents a hydrocarbon group with 1 to 18 carbon atoms or is optionally a functional group formed by partially substituting the hydrocarbon group with a heteroatom].

6. The re-peelable water dispersion type acryl-based pressure-sensitive adhesive composition according to claim 5, wherein the cation of the ionic liquid is at least one kind cation selected from the group consisting of cations of imidazolium-containing salt type, pyridinium-containing salt type, morpholinium-containing salt type, pyrrolidinium-containing salt type, piperidinium-containing salt type, ammonium-containing salt type, phosphonium-containing salt type, and sulfonium-containing salt type.

7. The re-peelable water dispersion type acryl-based pressure-sensitive adhesive composition according to claim 5

or 6, wherein the ionic liquid contains at least one kind cation selected from the group consisting of cations represented by the following formulas (a) to (d):

[Formula 2]

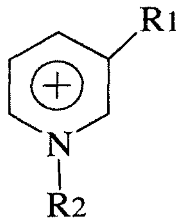
(a)

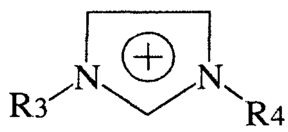
(b)

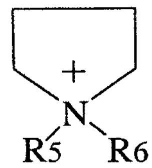
(c)

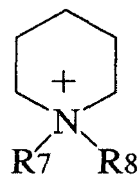
(d)

[in the formula (a), $R_1$ represents hydrogen or a hydrocarbon group with 1 to 3 carbon atoms; and $R_2$ represents hydrogen or a hydrocarbon group with 1 to 7 carbon atoms];
[in the formula (b), $R_3$ represents hydrogen or a hydrocarbon group with 1 to 3 carbon atoms; and $R_4$ represents hydrogen or a hydrocarbon group with 1 to 7 carbon atoms];
[in the formula (c), $R_5$ represents hydrogen or a hydrocarbon group with 1 to 3 carbon atoms; and $R_6$ represents hydrogen or a hydrocarbon group with 1 to 7 carbon atoms]; and
[in the formula (d), $R_7$ represents hydrogen or a hydrocarbon group with 1 to 3 carbon atoms; and $R_8$ represents hydrogen or a hydrocarbon group with 1 to 7 carbon atoms].

**8.** The re-peelable water dispersion type acryl-based pressure-sensitive adhesive composition according to any one of claims 1 to 4, wherein the ionic compound is an alkali metal salt.

**9.** The re-peelable water dispersion type acryl-based pressure-sensitive adhesive composition according to claim 8, wherein the alkali metal salt is a lithium salt.

**10.** The re-peelable water dispersion type acryl-based pressure-sensitive adhesive composition according to any one of claims 1 to 9, which comprises 0.1 to 3 parts by weight of the ionic compound per 100 parts by weight of the acrylic emulsion-based polymer (solid matter).

**11.** The re-peelable water dispersion type acryl-based pressure-sensitive adhesive composition according to any one of claims 1 to 10, which comprises 0.2 to 1 part by weight of an ether-containing polysiloxane per 100 parts by weight of the acrylic emulsion-based polymer (solid matter).

**12.** The re-peelable water dispersion type acryl-based pressure-sensitive adhesive composition according to any one of claims 1 to 11, wherein the acrylic emulsion-based polymer is a polymer obtained by polymerization using a reactive emulsifier containing a radical polymerizable functional group in the molecule.

**13.** The re-peelable water dispersion type acryl-based pressure-sensitive adhesive composition according to any one of claims 1 to 12, wherein the acrylic emulsion-based polymer is a polymer obtained by polymerization of the entire amount of a monomer emulsion formed of the raw material monomers by dropping.

**14.** The re-peelable water dispersion type acryl-based pressure-sensitive adhesive composition according to any one of claims 1 to 13, further comprising a water-insoluble crosslinking agent having two or more functional groups which can be reacted with a carboxyl group in the molecule.

**15.** The re-peelable water dispersion type acryl-based pressure-sensitive adhesive composition according to any one of claims 1 to 14, wherein the acrylic emulsion-based polymer is a polymer obtained by polymerization using 0.01 to 1 part by weight of a polymerization initiator per 100 parts by weight in total of the raw material monomers.

**16.** The re-peelable water dispersion type acryl-based pressure-sensitive adhesive composition according to any one of claims 1 to 15, wherein the acrylic emulsion-based polymer is a polymer obtained by polymerization using a chain transfer agent.

**17.** A pressure-sensitive adhesive sheet comprising a substrate and a pressure-sensitive adhesive layer formed of the re-peelable water dispersion type acryl-based pressure-sensitive adhesive composition according to any one of claims 1 to 16 on at least one surface of the substrate.

**18.** The pressure-sensitive adhesive sheet according to claim 17 , which is a surfaceprotecting film for an optical member.

**19.** A method for producing the pressure-sensitive adhesive sheet according to claim 17 or 18, comprising steps of:

preparing a monomer emulsion by stirring and mixing the raw material monomers; and
preparing the acrylic emulsion-based polymer by dropping the entire amount of the monomer emulsion and carrying out polymerization reaction.

**20.** A pressure-sensitive adhesive sheet obtained by the method for producing pressure-sensitive adhesive sheet according to claim 19.

**21.** An optical member obtained by stacking the pressure-sensitive adhesive sheet according to any one of claims 17, 18 and 20.

## Patentansprüche

**1.** Wieder abziehbare Acrylhaftklebstoffzusammensetzung vom Wasserdispersionstyp, umfassend ein Acrylpolymer auf Emulsionsbasis, zusammengesetzt aus einem (Meth)acrylsäurealkylester in einer Menge von 70 bis 99,5 Gew.-% und einem carboxylhaltigen ungesättigten Monomer in einer Menge von 0,5 bis 10 Gew.-% als Ausgangsmaterialmonomere, ein Vernetzungsmittel und eine ionische Verbindung, wobei
das Acrylpolymer auf Emulsionsbasis einen mittleren Teilchendurchmesser von 130 bis 600 nm aufweist, und
die ionische Verbindung eine ionische Flüssigkeit und/oder ein Alkalimetallsalz ist.

**2.** Wieder abziehbare Acrylhaftklebstoffzusammensetzung vom Wasserdispersionstyp nach Anspruch 1, wobei die ionische Verbindung ein imidhaltiges Anion enthält.

**3.** Wieder abziehbare Acrylhaftklebstoffzusammensetzung vom Wasserdispersionstyp nach Anspruch 1 oder 2, wobei die ionische Verbindung ein sulfonylhaltiges Anion enthält.

**4.** Wieder abziehbare Acrylhaftklebstoffzusammensetzung vom Wasserdispersionstyp nach einem der Ansprüche 1 bis 3, wobei die ionische Verbindung ein fluoralkylhaltiges Anion enthält.

**5.** Wieder abziehbare Acrylhaftklebstoffzusammensetzung vom Wasserdispersionstyp nach einem der Ansprüche 1 bis 4, wobei die ionische Verbindung eine ionische Flüssigkeit ist und wenigstens eine Art von Kation, ausgewählt aus der Gruppe bestehend aus Kationen, die durch die folgenden Formeln (A) bis (E) wiedergegeben sind, enthält:

[Formel 1]

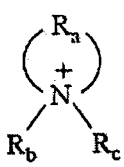
(A)

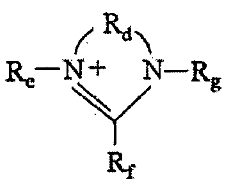
(B)

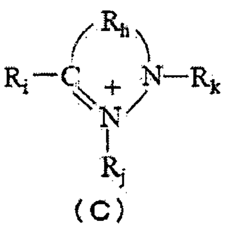
(C)

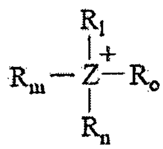
(D)

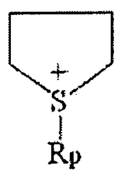
(E)

wobei in der Formel (A) $R_a$ eine Kohlenwasserstoffgruppe mit 4 bis 20 Kohlenstoffatomen bedeutet oder gegebenenfalls eine funktionelle Gruppe ist, die durch teilweises Substituieren der Kohlenwasserstoffgruppe mit einem Heteroatom gebildet wird; und $R_b$ und $R_c$ gleich oder verschieden sind und jeweils Wasserstoff oder eine Kohlenwasserstoffgruppe mit 1 bis 16 Kohlenstoffatomen bedeuten oder jeweils gegebenenfalls eine funktionelle Gruppe sind, die durch teilweises Substituieren der Kohlenwasserstoffgruppe mit einem Heteroatom gebildet wird; mit der Maßgabe, dass, wenn das Stickstoffatom eine Doppelbindung enthält, es kein $R_c$ gibt;

wobei in der Formel (B) $R_d$ eine Kohlenwasserstoffgruppe mit 2 bis 20 Kohlenstoffatomen bedeutet oder gegebenenfalls eine funktionelle Gruppe ist, die durch teilweises Substituieren der Kohlenwasserstoffgruppe mit einem Heteroatom gebildet wird; und $R_e$, $R_f$ und $R_g$ gleich oder verschieden sind und jeweils Wasserstoff oder eine Kohlenwasserstoffgruppe mit 1 bis 16 Kohlenstoffatomen bedeuten oder jeweils gegebenenfalls eine funktionelle Gruppe sind, die durch teilweises Substituieren der Kohlenwasserstoffgruppe mit einem Heteroatom gebildet wird;
wobei in der Formel (C) $R_h$ eine Kohlenwasserstoffgruppe mit 2 bis 20 Kohlenstoffatomen bedeutet oder gegebenenfalls eine funktionelle Gruppe ist, die durch teilweises Substituieren der Kohlenwasserstoffgruppe mit einem Heteroatom gebildet wird; und $R_i$, $R_j$ und $R_k$ gleich oder verschieden sind und jeweils Wasserstoff oder eine Kohlenwasserstoffgruppe mit 1 bis 16 Kohlenstoffatomen bedeuten oder jeweils gegebenenfalls eine funktionelle Gruppe sind, die durch teilweises Substituieren der Kohlenwasserstoffgruppe mit einem Heteroatom gebildet wird;
wobei in der Formel (D) Z ein Stickstoff-, Schwefel- oder Phosphoratom bedeutet; $R_l$, $R_m$, $R_n$ und $R_o$ gleich oder verschieden sind und jeweils eine Kohlenwasserstoffgruppe mit 1 bis 20 Kohlenstoffatomen bedeuten oder jeweils gegebenenfalls eine funktionelle Gruppe sind, die durch teilweises Substituieren der Kohlenwasserstoffgruppe mit einem Heteroatom gebildet wird; mit der Maßgabe, dass, wenn Z ein Schwefelatom ist, es kein $R_o$ gibt; und
wobei in der Formel (E) $R_p$ eine Kohlenwasserstoffgruppe mit 1 bis 18 Kohlenstoffatomen bedeutet oder gegebenenfalls eine funktionelle Gruppe ist, die durch teilweises Substituieren der Kohlenwasserstoffgruppe mit einem Heteroatom gebildet wird.

6. Wieder abziehbare Acrylhaftklebstoffzusammensetzung vom Wasserdispersionstyp nach Anspruch 5, wobei das Kation der ionischen Flüssigkeit wenigstens eine Art von Kation, ausgewählt aus der Gruppe bestehend aus Kationen vom imidazoliumhaltigen Salztyp, pyridiniumhaltigen Salztyp, morpholiniumhaltigen Salztyp, pyrrolidiniumhaltigen Salztyp, piperidiniumhaltigen Salztyp, ammoniumhaltigen Salztyp, phosphoniumhaltigen Salztyp und sulfoniumhaltigen Salztyp, ist.

7. Wieder abziehbare Acrylhaftklebstoffzusammensetzung vom Wasserdispersionstyp nach Anspruch 5 oder 6, wobei die ionische Flüssigkeit wenigstens eine Art von Kation, ausgewählt aus der Gruppe bestehend aus Kationen, die durch die folgenden Formeln (a) bis (d) wiedergegeben sind, enthält:

[Formel 2]

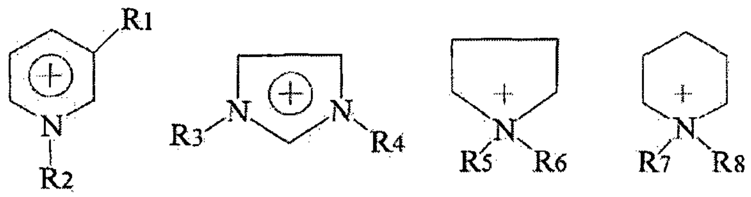

(a) (b) (c) (d)

wobei in der Formel (a) $R_1$ Wasserstoff oder eine Kohlenwasserstoffgruppe mit 1 bis 3 Kohlenstoffatomen bedeutet; und $R_2$ Wasserstoff oder eine Kohlenwasserstoffgruppe mit 1 bis 7 Kohlenstoffatomen bedeutet;
wobei in der Formel (b) $R_3$ Wasserstoff oder eine Kohlenwasserstoffgruppe mit 1 bis 3 Kohlenstoffatomen bedeutet; und $R_4$ Wasserstoff oder eine Kohlenwasserstoffgruppe mit 1 bis 7 Kohlenstoffatomen bedeutet;
wobei in der Formel (c) $R_5$ Wasserstoff oder eine Kohlenwasserstoffgruppe mit 1 bis 3 Kohlenstoffatomen bedeutet; und $R_6$ Wasserstoff oder eine Kohlenwasserstoffgruppe mit 1 bis 7 Kohlenstoffatomen bedeutet; und
wobei in der Formel (d) $R_7$ Wasserstoff oder eine Kohlenwasserstoffgruppe mit 1 bis 3 Kohlenstoffatomen bedeutet; und $R_8$ Wasserstoff oder eine Kohlenwasserstoffgruppe mit 1 bis 7 Kohlenstoffatomen bedeutet.

8. Wieder abziehbare Acrylhaftklebstoffzusammensetzung vom Wasserdispersionstyp nach einem der Ansprüche 1 bis 4, wobei die ionische Verbindung ein Alkalimetallsalz ist.

9. Wieder abziehbare Acrylhaftklebstoffzusammensetzung vom Wasserdispersionstyp nach Anspruch 8, wobei das Alkalimetallsalz ein Lithiumsalz ist.

10. Wieder abziehbare Acrylhaftklebstoffzusammensetzung vom Wasserdispersionstyp nach einem der Ansprüche 1 bis 9, welche 0,1 bis 3 Gewichtsteile der ionischen Verbindung pro 100 Gewichtsteilen des Acrylpolymers auf Emulsionsbasis (Festsubstanz) umfasst.

**11.** Wieder abziehbare Acrylhaftklebstoffzusammensetzung vom Wasserdispersionstyp nach einem der Ansprüche 1 bis 10, welche 0,2 bis 1 Gewichtsteile eines etherhaltigen Polysiloxans pro 100 Gewichtsteilen des Acrylpolymers auf Emulsionsbasis (Festsubstanz) umfasst.

**12.** Wieder abziehbare Acrylhaftklebstoffzusammensetzung vom Wasserdispersionstyp nach einem der Ansprüche 1 bis 11, wobei das Acrylpolymer auf Emulsionsbasis ein Polymer ist, das durch Polymerisation unter Verwendung eines reaktiven Emulgators erhalten wird, der eine radikalisch polymerisierbare funktionelle Gruppe in dem Molekül enthält.

**13.** Wieder abziehbare Acrylhaftklebstoffzusammensetzung vom Wasserdispersionstyp nach einem der Ansprüche 1 bis 12, wobei das Acrylpolymer auf Emulsionsbasis ein Polymer ist, das durch Polymerisation der gesamten Menge einer Monomeremulsion erhalten wird, die aus den Ausgangsmaterialmonomeren durch Tropfen erhalten wird.

**14.** Wieder abziehbare Acrylhaftklebstoffzusammensetzung vom Wasserdispersionstyp nach einem der Ansprüche 1 bis 13, außerdem umfassend ein wasserunlösliches Vernetzungsmittel mit zwei oder mehr funktionellen Gruppen, welche mit einer Carboxylgruppe in dem Molekül umgesetzt werden können.

**15.** Wieder abziehbare Acrylhaftklebstoffzusammensetzung vom Wasserdispersionstyp nach einem der Ansprüche 1 bis 14, wobei das Acrylpolymer auf Emulsionsbasis ein Polymer ist, das durch Polymerisation unter Verwendung von 0,01 bis 1 Gewichtsteilen eines Polymerisationsinitiators pro insgesamt 100 Gewichtsteilen der Ausgangsmaterialmonomere erhalten wird.

**16.** Wieder abziehbare Acrylhaftklebstoffzusammensetzung vom Wasserdispersionstyp nach einem der Ansprüche 1 bis 15, wobei das Acrylpolymer auf Emulsionsbasis ein Polymer ist, das durch Polymerisation unter Verwendung eines Kettenübertragungsreagenzes erhalten wird.

**17.** Haftklebefolie umfassend ein Substrat und eine Haftklebstoffschicht, die aus der wieder abziehbaren Acrylhaftklebstoffzusammensetzung vom Wasserdispersionstyp nach einem der Ansprüche 1 bis 16 gebildet ist, auf wenigstens einer Oberfläche des Substrats.

**18.** Haftklebefolie nach Anspruch 17, welche ein Oberflächenschutzfilm für ein optisches Element ist.

**19.** Verfahren zum Herstellen der Haftklebefolie nach Anspruch 17 oder 18, umfassend die Schritte:

Herstellen einer Monomeremulsion durch Rühren und Mischen der Ausgangsmaterialmonomere; und
Herstellen des Acrylpolymers auf Emulsionsbasis durch Tropfen der gesamten Menge der Monomeremulsion und Ausführen der Polymerisationsreaktion.

**20.** Haftklebefolie, erhalten durch das Verfahren zum Herstellen einer Haftklebefolie nach Anspruch 19.

**21.** Optisches Element erhalten durch Stapeln der Haftklebefolie nach einem der Ansprüche 17, 18 und 20.

## Revendications

**1.** Une composition adhésive redécollable type dispersion aqueuse à base acrylique sensible à la pression comprenant un polymère à base d'émulsion acrylique composé d'un ester d'alkyle d'acide (méth)acrylique en une quantité de 70 à 99.5% en masse et un monomère insaturé comprenant un groupe carboxyle en une quantité de 0.5 à 10% en masse en tant que monomères de matière première, un agent réticulant, et un composé ionique, dans lequel
le polymère à base d'émulsion acrylique a un diamètre particulaire moyen de 130 à 600 nm, et
le compose ionique est un liquide ionique et/ou un sel de métal alcalin.

**2.** La composition adhésive redécollable type dispersion aqueuse à base acrylique sensible à la pression selon la revendication 1, dans laquelle le composé ionique contient un anion contenant une imide.

**3.** La composition adhésive redécollable type dispersion aqueuse à base acrylique sensible à la pression selon la revendication 1 ou 2, dans laquelle le composé ionique contient un anion contenant un sulfonyle.

4. La composition adhésive redécollable type dispersion aqueuse à base acrylique sensible à la pression selon une quelconque des revendications 1 à 3, dans laquelle le composé ionique contient un anion contenant un fluoroalkyle.

5. La composition adhésive redécollable type dispersion aqueuse à base acrylique sensible à la pression selon une quelconque des revendications 1 à 4, dans laquelle le composé ionique est un liquide ionique et contient au moins une sorte de cation sélectionné parmi le groupe consistant en des cations représentés par les formules suivantes (A) à (E):

[Formule 1]

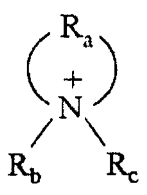

(A)

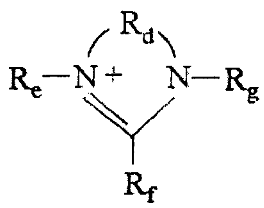

(B)

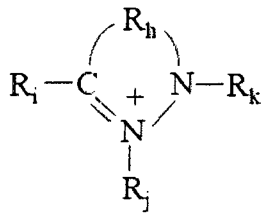

(C)

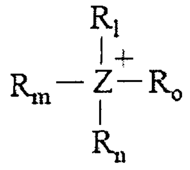

(D)

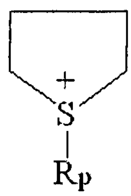

(E)

[dans la formule (A), $R_a$ représente un groupe hydrocarboné avec 4 à 20 atomes de carbone ou représente éventuellement un groupe fonctionnel formé par la substitution partielle du groupe hydrocarboné par un hétéroatome; et $R_b$ et $R_c$ sont les mêmes ou différents, et chacun représente un hydrogène ou un groupe hydrocarboné avec 1 à 16 atomes de carbone ou représentent chacun éventuellement un groupe fonctionnel formé par la substitution partielle du groupe hydrocarboné par un hétéroatome; à condition que quand l'atome d'azote contient une double liaison, il n'y ait pas de $R_c$];
[dans la formule (B), $R_d$ représente un groupe hydrocarboné avec 2 à 20 atomes de carbone ou représente éventuellement un groupe fonctionnel formé par la substitution partielle du groupe hydrocarboné par un hétéroatome; et $R_e$, $R_f$, et $R_g$ sont les mêmes ou différents, et chacun représente un hydrogène ou un groupe hydrocarboné avec 1 à 16 atomes de carbone ou représentent chacun éventuellement un groupe fonctionnel formé par la substitution partielle du groupe hydrocarboné par un hétéroatome];
[dans la formule (C), $R_h$ représente un groupe hydrocarboné avec 2 à 20 atomes de carbone ou représente éventuellement un groupe fonctionnel formé par la substitution partielle du groupe hydrocarboné par un hétéroatome; et $R_i$, $R_j$, et $R_k$ sont les mêmes ou différents, et chacun représente un hydrogène ou un groupe hydrocarboné avec 1 à 16 atomes de carbone ou représentent chacun éventuellement un groupe fonctionnel formé par la substitution partielle du groupe hydrocarboné par un hétéroatome];
[dans la formule (D), Z représente un atome d'azote, de soufre ou de phosphore; $R_l$, $R_m$, $R_n$, et $R_o$ sont les mêmes ou différents, et chacun représente un groupe hydrocarboné avec 1 à 20 atomes de carbone ou représentent chacun éventuellement un groupe fonctionnel formé par la substitution partielle du groupe hydrocarboné par un hétéroatome; à condition que quand Z est un atome de soufre, il n'y ait pas de $R_o$]; et
[dans la formule (E), $R_p$ représente un groupe hydrocarboné avec 1 à 18 atomes de carbone ou représente éventuellement un groupe fonctionnel formé par la substitution partielle du groupe hydrocarboné par un hétéroatome].

6. La composition adhésive redécollable type dispersion aqueuse à base acrylique sensible à la pression selon la revendication 5, dans laquelle le cation du liquide ionique est au moins une sorte de cation sélectionné parmi le groupe consistant en des cations de un type de sel contenant de l'imidazolium, un type de sel contenant du pyridinium, un type de sel contenant du morpholinium, un type de sel contenant du pyrrolidinium, un type de sel contenant du pipéridinium, un type de sel contenant de l'ammonium, un type de sel contenant du phosphonium, et un type de sel contenant du sulfonium.

7. La composition adhésive redécollable type dispersion aqueuse à base acrylique sensible à la pression selon la revendication 5 ou 6, dans laquelle le liquide ionique contient au moins une sorte de cation sélectionné parmi le groupe consistant en des cations représentés par les formules suivantes (a) à (d):

[Formule 2]

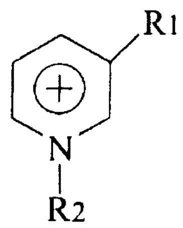
(a)

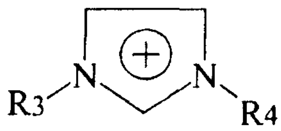
(b)

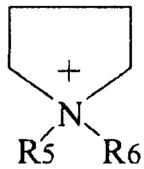
(c)

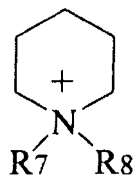
(d)

[dans la formule (a), $R_1$ représente un hydrogène ou un groupe hydrocarboné avec 1 à 3 atomes de carbone; et $R_2$ représente un hydrogène ou un groupe hydrocarboné avec 1 à 7 atomes de carbone];
[dans la formule (b), $R_3$ représente un hydrogène ou un groupe hydrocarboné avec 1 à 3 atomes de carbone; et $R_4$ représente un hydrogène ou un groupe hydrocarboné avec 1 à 7 atomes de carbone];
[dans la formule (c), $R_5$ représente un hydrogène ou un groupe hydrocarboné avec 1 à 3 atomes de carbone; et $R_6$ représente un hydrogène ou un groupe hydrocarboné avec 1 à 7 atomes de carbone]; et
[dans la formule (d), $R_7$ représente un hydrogène ou un groupe hydrocarboné avec 1 à 3 atomes de carbone; et $R_8$ représente un hydrogène ou un groupe hydrocarboné avec 1 à 7 atomes de carbone].

**8.** La composition adhésive redécollable type dispersion aqueuse à base acrylique sensible à la pression selon une quelconque des revendications 1 à 4, dans laquelle le composé ionique est un sel de métal alcalin.

**9.** La composition adhésive redécollable type dispersion aqueuse à base acrylique sensible à la pression selon la revendication 8, dans laquelle le sel de métal alcalin est un sel de lithium.

**10.** La composition adhésive redécollable type dispersion aqueuse à base acrylique sensible à la pression selon une quelconque des revendications 1 à 9, qui comprend 0.1 à 3 parties en masse du composé ionique pour 100 parties en masse du polymère à base d'émulsion acrylique (matière solide).

**11.** La composition adhésive redécollable type dispersion aqueuse à base acrylique sensible à la pression selon une quelconque des revendications 1 à 10, qui comprend 0.2 à 1 partie en masse d'un polysiloxane contenant de l'éther pour 100 parties en masse du polymère à base d'émulsion acrylique (matière solide).

**12.** La composition adhésive redécollable type dispersion aqueuse à base acrylique sensible à la pression selon une quelconque des revendications 1 à 11, dans laquelle le polymère à base d'émulsion acrylique est un polymère obtenu par polymérisation en utilisant un émulsifiant réactif contenant un groupe fonctionnel polymérisable par voie radicalaire dans la molécule.

**13.** La composition adhésive redécollable type dispersion aqueuse à base acrylique sensible à la pression selon une quelconque des revendications 1 à 12, dans laquelle le polymère à base d'émulsion acrylique est un polymère obtenu par polymérisation de la quantité totale d'une émulsion de monomère formé en déposant des monomères de matières premières.

**14.** La composition adhésive redécollable type dispersion aqueuse à base acrylique sensible à la pression selon une quelconque des revendications 1 à 13, comprenant en outre un agent de réticulation insoluble dans l'eau ayant deux groupes fonctionnels ou plus qui peuvent être mis en réaction avec un groupe carboxyle dans la molécule.

**15.** La composition adhésive redécollable type dispersion aqueuse à base acrylique sensible à la pression selon une quelconque des revendications 1 à 14, dans laquelle le polymère à base d'émulsion acrylique est un polymère obtenu par polymérisation en utilisant 0.01 à 1 partie en masse d'un initiateur de polymérisation pour 100 parties en masse du total des monomères de matières premières.

**16.** La composition adhésive redécollable type dispersion aqueuse à base acrylique sensible à la pression selon une quelconque des revendications 1 à 15, dans laquelle le polymère à base d'émulsion acrylique est un polymère obtenu par polymérisation en utilisant un agent de transfert de chaîne.

17. Une feuille adhésive sensible à la pression comprenant un substrat et une couche adhésive sensible à la pression formée de la composition adhésive redécollable type dispersion aqueuse à base acrylique sensible à la pression selon une quelconque des revendications 1 à 16 sur au moins une surface du substrat.

18. La feuille adhésive sensible à la pression selon la revendication 17, qui est un film protecteur de surface pour un élément optique.

19. Un procédé de production de la feuille adhésive sensible à la pression selon la revendication 17 ou 18, comprenant les étapes de:

préparation d'une émulsion de monomère en agitant et mélangeant les monomères de matières premières; et préparation du polymère à base d'émulsion acrylique en déposant la quantité totale de l'émulsion de monomère et en effectuant une réaction de polymérisation.

20. Une feuille adhésive sensible à la pression obtenue par le procédé de production de feuille adhésive sensible à la pression selon la revendication 19.

21. Un élément optique obtenu par empilement de feuille adhésive sensible à la pression selon une quelconque des revendications 17, 18 et 20.

Fig.1

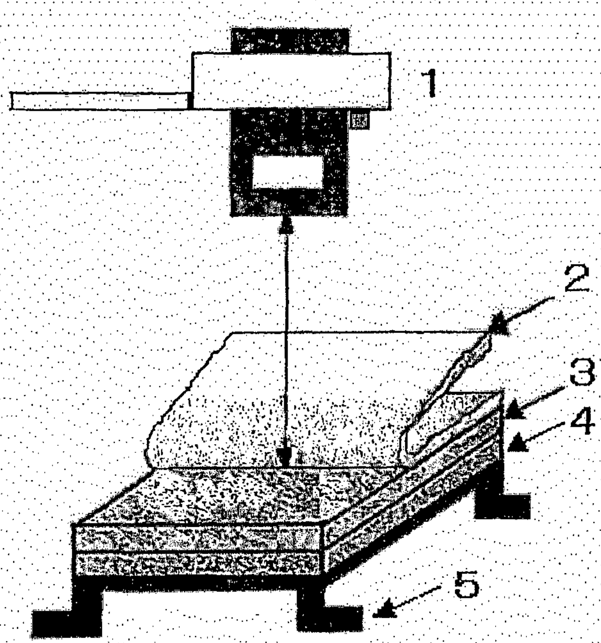

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11000961 A
- JP 2001064607 A
- JP 2001131512 A
- JP 2003027026 A
- JP 3810490 B
- JP H09165460 A
- JP 2007031585 A
- JP 2006045412 A


### Non-patent literature cited in the description


- Ionic liquids-Front line and future for developments. CMC Co., Ltd,